# EUROPEAN PATENT APPLICATION

(11) **EP 4 831 839 A1**
(43) Date of publication of application: **28.10.2026**
(21) Application number: 25172573.5
(22) Date of filing: 25.04.2025
(51) Int. Cl.: G06F 18/21, G06V 10/82, G06V 20/64, G06V 10/778

(54) **METHOD AND SYSTEM FOR AUTOMATICALLY OPTIMIZING OBJECT DETECTION MODEL FOR ACCURATELY DETECTING OBJECTS IN A COMPUTER SIMULATED ENVIRONMENT**

(71) Applicant: Siemens Aktiengesellschaft, 80333 München (DE)
(72) Inventor: CHATTI, Bhanu venkata sai phani, 522601 Narasaraopeta, Andra pradesh (IN); SRIKAR REDDY, Kuncharapu, 506009 Warangal, Telangana (IN); SINGH, Saurabh Narayan, 81739 München (DE)
(74) Representative: HKW Intellectual Property PartG mbB

(57) **Abstract**

Disclosed is a method (400) and computing system (100) for optimizing object detection model for detecting objects in a computer simulated environment (107). The method comprises receiving, by a processing unit (114, 202), point cloud data (706), extracting features from point cloud data, selecting base object detection model (702) based on extracted features, generating a first set of pattern models (704) from base object detection model, determining first set of model optimization parameters for updating base object detection model to obtain a first set of object detection models (708), evaluating performance of first set of pattern models by calculating fitness score based on accuracy of object detection task performed, iteratively generating second set of pattern models (812) and corresponding second set of optimization parameters to obtain a second set of object detection models (814), until target criteria is satisfied, identifying optimized object detection models from second set of object detection models or first set of object detection models based on a pre-defined level of accuracy for object detection tasks to be performed on point cloud data, and performing object detection tasks on point cloud data, using optimized object detection models.

## Description

The present invention generally relates to the field of computer vision and artificial intelligence systems, and more particularly relates to a method and a system for automatically optimizing object detection model for accurately detecting one or more objects in a computer simulated environment.

In computer simulated environments such as metaverse applications, a crucial step for creating dynamic and interactive virtual worlds is the automated onboarding of scenes. One effective technique for scene representation and understanding involves capturing 3D scans of environments and converting them into point cloud format. Point cloud data provides a spatial representation of scenes and objects as a set of 3D points. To enable scene understanding and object interaction within the metaverse, object detection algorithms are applied to these point cloud scenes to identify and localize specific objects.

Current approaches to object detection in point clouds, particularly for metaverse applications, heavily rely on artificial intelligence methods, primarily utilizing neural networks. In existing techniques, the process of point cloud object detection generally involves the following steps: point cloud acquisition, preprocessing, feature extraction, object detection algorithms, training and annotation, and evaluation and post-processing, culminating in integration into the metaverse environment. Various object detection algorithms are employed, including 3D region proposal networks (RPN), point-based methods like PointNet and its variants, voxel-based approaches using 3D CNNs, and frustum-based techniques.

Despite the advancements in point cloud object detection and the availability of various neural network-based algorithms, several shortcomings impede their effective application within metaverse environments.

One of the major challenges is that existing techniques of creating object detection algorithms is that the process is manual and hence time-consuming. Traditionally, neural network architectures for point cloud object detection are designed manually by experts. This manual design process is inherently time-consuming, labour-intensive, and relies heavily on expert intuition and trial-and-error. It is challenging to explore the vast architectural search space effectively and may lead to suboptimal architectures being chosen. The reliance on manual design creates a bottleneck in the rapid development and deployment of point cloud object detection models for metaverse applications.

Another major challenge is that the process of object detection algorithms design is not efficient. Manual design often results in neural network architectures that are not fully optimized for the specific demands of metaverse applications. Point cloud data in metaverse settings can be complex and require efficient processing for real-time performance. Manually designed networks may lack the efficiency necessary for seamless metaverse experiences, leading to increased computational cost, latency, and reduced scalability. The existing methods do not provide an automated methodology to discover truly optimized architectures tailored for metaverse point cloud data. Current algorithms often lack the necessary optimizations to perform effectively on resource-limited devices (like VR/AR headsets) or to scale to complex, dynamic metaverse scenes. Furthermore, current algorithms do not provide an approach that inherently prioritizes and achieves efficiency tailored to the unique demands of metaverse environments

Yest another challenge with existing techniques is that neural network architectures designed manually may be prone to overfitting to specific training datasets or may not generalize well to the diverse and dynamic nature of metaverse environments. Achieving robust generalization and preventing overfitting is crucial for reliable object detection in varied metaverse scenes, but manual design offers limited tools for systematically ensuring these qualities. Manual design methods do not offer systematic mechanisms to ensure robust generalization across varied metaverse scenes and object types. Currently, an algorithm design process that actively promotes generalization and mitigates the risk of overfitting to specific training data, ensuring reliable object detection in diverse and evolving metaverse worlds is missing.

In summary, existing approaches to point cloud object detection for metaverse applications are fundamentally limited by their reliance on manual, expert-driven neural network design. This manual approach fails to deliver the automated optimization of object detection algorithms, efficiency, generalization, and rapid development pipeline that are critically needed to realize the full potential of object detection for immersive and interactive metaverse experiences. Therefore, a novel and automated solution is required to overcome these limitations and accelerate the creation of efficient and high-performing models tailored to specific metaverse requirements.

Therefore, there is a need for an improved, automated, and reliable method and system for optimizing object detection model for accurately detecting one or more objects in a computer simulated environment, and to address at least the aforementioned issues of the prior arts.

Therefore, it is an object of the present invention to provide a method and a system for automatically optimizing object detection model for accurately detecting one or more objects in a computer simulated environment.

The object of the present invention is achieved by a method for optimizing object detection model for accurately detecting one or more objects in a computer simulated environment. The method comprises receiving, by a processing unit, point cloud data pertaining to a real-world scene having one or more objects therein corresponding to one or more assets in a technical installation. The method comprises extracting, by the processing unit, one or more features from individual points in the point cloud data. The one or more features correspond to one or more properties of the one or more objects. The method comprises selecting, by the processing unit, a base object detection model based on the extracted features, wherein the selection is based on a probability of accurate object detection when the base object detection model is executed on the point cloud data. The method comprises generating, by the processing unit, a first set of pattern models from the base object detection model. Each of the pattern models in the first set of pattern models identify symmetries and patterns from the point cloud data. The method comprises determining, by the processing unit, a first set of model optimization parameters for updating the base object detection model based on the results of the execution of pattern models on the point cloud data, to obtain a first set of object detection models. The method comprises evaluating, by the processing unit, a performance of each of first set of pattern models by calculating a fitness score based on an accuracy of object detection task performed by the corresponding object detection model in the first set of object detection models. The method comprises iteratively generating, by the processing unit, a second set of pattern models and corresponding second set of optimization parameters to obtain a second set of object detection models, until a target criteria is satisfied. The target criteria is identifying a pattern model and corresponding optimization parameters that when executed on the point cloud data using the updated object detection model, outputs a fitness score above a predefined threshold fitness score. Herein, each of the pattern models in the second set of pattern models identify symmetries and patterns from the point cloud data. The method comprises identifying, by the processing unit, one or more optimized object detection models from the second set of object detection models or first set of object detection models based on a pre-defined level of accuracy for object detection tasks to be performed on the point cloud data. The method comprises performing, by the processing unit, object detection tasks on the received point cloud data, using the one or more optimized object detection models.

In an embodiment, the method of determining the first set of model optimization parameters comprises generating, by the processing unit, a first set of patterns from the point cloud data by executing the generated first set of pattern models on the point cloud data. Herein, the first set of patterns comprises at least one of: spatial arrangements, object symmetries, orientation patterns, object scaling variations, and relational patterns between the objects. Further, the method of determining the first set of model optimization parameters comprises determining, by the processing unit, the first set of model optimization parameters for updating the base object detection model based on the generated first set of patterns. Herein, the first set of model optimization parameters comprises at least one of: number of layers of nodes in the first set of pattern models, number of nodes in each layer in the first set of pattern models, connections between nodes of the first set of pattern models, and weights of each connection of the first set of pattern models.

In an embodiment, the method further comprises generating the first set of object detection models by updating, by the processing unit, one or more initial parameters of the base object detection model with one or more model optimization parameters in the first set of model optimization parameters. Herein, the one or more model optimization parameters correspond to each pattern model in the first set of pattern models. Further, the method comprises generating, by the processing unit, the first set of object detection models corresponding to the first set of model optimization parameters comprising one or more model optimization parameters determined for each pattern model in the first set of pattern models.

In an embodiment, the method of evaluating the performance of each of first set of pattern models comprises executing each of the first set of object detection models on the point cloud data. The method of evaluating the performance of each of first set of pattern models comprises calculating a fitness score for each of the first set of pattern models corresponding to respective first set of object models, wherein the fitness score is calculated based on an accuracy of object detection task of the respective first set of object detection models.

In an embodiment, the method of determining the second set of model optimization parameters comprises generating, by the processing unit, a second set of patterns from the point cloud data by executing the generated second set of pattern models on the point cloud data. Herein, the second set of patterns comprises at least one of: spatial arrangements, object symmetries, orientation patterns, object scaling variations, and relational patterns between the objects. Further, the method comprises determining, by the processing unit, the second set of model optimization parameters for updating the first set of object detection models based on the generated second set of patterns. Herein, the second set of parameters comprises at least one of: number of layers of nodes in the second set of pattern models, number of nodes in each layer in the second set of pattern models, connections between nodes of the second set of pattern models, and weights of each connection of the second set of pattern models.

In an embodiment, the method further comprises generating the second set of object detection models by updating, by the processing unit, one or more parameters of each of the first set of object detection models with one or more model optimization parameters in the second set of model optimization parameters. Herein, the one or more model optimization parameters correspond to each pattern model in the second set of pattern models. Further, the method comprises generating, by the processing unit, the second set of object detection models corresponding to the second set of model optimization parameters comprising one or more model optimization parameters determined for each pattern model in the second set of pattern models.

In an embodiment, the method of evaluating the performance of each of second set of pattern models comprises executing each of the second set of object detection models on the point cloud data. Further, the method comprises calculating a fitness score for each of the second set of pattern models corresponding to respective second set of object models. The fitness score is calculated based on an accuracy of object detection task of the respective second set of object detection models.

In an embodiment, the method of identifying one or more optimized object detection models from the first set of object detection models comprises selecting the one or more object detection models from the first set of object detection models corresponding to the pattern model from the first set of pattern models having a highest fitness score, if the first set of pattern models comprises at least one pattern model with a fitness score above the predefined threshold fitness score.

In an embodiment, the method of identifying one or more optimized object detection models from the second set of object detection models comprises selecting, by the processing unit, the one or more object detection models from the second set of object detection models corresponding to the pattern model from the second set of pattern models having a highest fitness score, if the second set of pattern models comprises at least one pattern model with a fitness score above the predefined threshold fitness score.

In an embodiment, the method of generating the first set of pattern models comprises randomizing architecture of the base object detection model, each architecture comprising random network topology of different layers of nodes, connection between each layer of nodes, and corresponding weights of each connection between nodes.

In an embodiment, the method of generating the second set of pattern models comprises selecting, by the processing unit, top performing pattern models from the first set of pattern models, wherein the first set of pattern models when evaluated on the base object detection model have the fitness score below the predefined threshold fitness score. Further, the method comprises generating, by the processing unit, the second set of pattern models from the top performing models using crossover, mutation and speciation techniques of neuro-evolution algorithms. Herein, the second of pattern models correspond to architectures having a new population of pattern models generated based on patterns learned from the point cloud data using the first set of pattern models.

In an embodiment, the method of selecting the top performing pattern models comprises ranking the first set of pattern models based on the calculated fitness score in a descending order. Further, the method comprises discarding last two pattern models from the first set of pattern models having lowest ranking in the order.

In an embodiment, the method generating the second set of pattern models using neuro-evolution algorithm comprises identifying network topology with parameters such as nodes and weights, of each the top performing models. Further, the method comprises mixing different pairs of the top performing models based on the identified network topology using crossover operation in order to generate the second set of pattern models, each having a novel architecture of the network topology.

In an embodiment, the method of generating the second set of pattern models using neuro-evolution algorithm comprises identifying network topology with parameters such as nodes and weights, of each the top performing pattern models. The method comprises introducing random changes to each of the top performing pattern models using mutation operation in order to generate the second set of pattern models, each having novel a novel architecture. Herein, random changes comprise at least one of: addition of a node, deletion of a node, addition of a connection, deletion of a connection, addition of a layer, and deletion of a layer.

In an embodiment, the method of generating the second set of pattern models using neuro-evolution algorithms comprises classifying the top performing pattern models into different groups based on a specie of the pattern models, wherein top performing pattern models having a topological similarity are clustered together. Further, the method comprises evolving the pattern models from each of the cluster using speciation operation in order to generate the second set of pattern models, each having novel a novel architecture.

In an embodiment, each of the pattern models in the first set of pattern models and the second set of pattern models identify symmetries and patterns from the point cloud data pertaining to at least one of: object placement, object orientation, object scale, object relationships, and spatial distribution.

In an embodiment, the one or more features comprises at least of: Point Coordinates (XYZ), Surface Normals, Curvature, RGB Values, Intensity Values, Connectivity, Neighborhood Relationships, Temporal Consistency, Bounding Boxes or Envelopes, Shape Descriptors, Spatial Relationships.

In an embodiment, the method of receiving the point cloud data comprises receiving a three-dimensional (3D) multimedia data corresponding to one or more scenes to be rendered in the computer-simulated environment, from one or more data acquisition devices.

In an embodiment, the method of extracting one or more features from the point cloud data further comprises removing anomalies from the point cloud data, wherein anomalies are at least one of: outliers, noise, missing data points, duplicate points, or irrelevant artifacts that do not represent the true geometry or structure of the objects within the environment.

In an embodiment, the method of performing, object detection tasks on the received point cloud data, using the optimized object detection model further comprises validating an accuracy of the optimized object detection model by executing the optimized object detection model on the received point cloud data.

In an embodiment, the method further comprises detecting, a substantial change in one or more features of the received point cloud data pertaining to one or more scenes of the computer simulated environment. Herein, the substantial change corresponds to a decrease in accuracy of a current object detection model in execution. Further, the method comprises iteratively generating, by the processing unit, a third set of pattern models and corresponding third set of optimization parameters to obtain a third set of object detection models, until a target criteria is satisfied, wherein the target criteria is identifying a pattern model and corresponding optimization parameters that when executed on the point cloud data using the updated object detection model, outputs a fitness score above a predefined threshold fitness score, when the substantial change in the one or more features of the point cloud data is detected.

In an embodiment, the method comprises storing, a plurality of optimized object detection models generated for a plurality of point cloud data against one or more features extracted from respective point clouds in a database. Further, the method comprises mapping, a new point cloud data to one of the optimized object detection models stored in the database based on a similarity of extracted one or more features from the new point cloud data to the one or more features stored in the database.

Another object of the present invention is achieved by a computing system for automatically optimizing object detection model for accurately detecting one or more objects in a computer simulated environment. The computing system comprises one or more processor(s) and a memory coupled to the one or more processor(s). The memory comprises an object detection model optimization module stored in a form of machine-readable instructions executable by the one or more processor(s). The object detection model optimization module is capable of performing method steps described above.

Yet another object of the present invention is achieved by a computing environment comprising one or more electronic devices, and one or more technical installations comprising one or more assets in a real-world environment. Further, the computing environment comprises one or more data acquisition devices configured to acquire the point cloud data. Further, the computing environment comprises a computing system communicatively coupled to the at least one of the one or more technical installations, the one or more data acquisition devices, and the one or more electronic devices via a network. The computing system comprises object detection model optimization module capable of performing method steps described above.

Yet another object of the present invention is achieved by a computer-program product, having machine-readable instructions stored therein, that when executed by a processor(s), cause the processor(s) to perform method steps described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG. 1: is a block representation of a system for automatically optimizing object detection model for accurately detecting one or more objects in a computer simulated environment, according to an embodiment of the present invention;
- FIG. 2: is a block diagram of an apparatus such as that shown in FIG. 1 for automatically optimizing object detection model for accurately detecting one or more objects in a computer simulated environment, depicting various components to implement embodiments of the present invention;
- FIG. 3: is a block diagram of an object detection model optimization module, such as those shown in FIGs. 1 and 2, capable of automatically optimizing object detection model for accurately detecting one or more objects in a computer simulated environment, according to an embodiment of the present invention;
- FIG. 4: is a flow diagram depicting an exemplary method of automatically optimizing object detection model for accurately detecting one or more objects in a computer simulated environment, according to an embodiment of the present invention;
- FIG. 5: is a flow diagram depicting an exemplary method of acquiring three-dimensional (3D) point cloud data, according to an embodiment of the present invention;
- FIG 6: is a flow diagram depicting an exemplary method of automatically optimizing object detection model for accurately detecting one or more objects in a computer simulated environment, according to an embodiment of the present invention;
- FIG 7: is a flow diagram depicting an exemplary method for generating the first set of object detection models, according to an embodiment of the present invention;
- FIG 8: is a flow diagram depicting an exemplary method for generating the second set of object detection models, according to an embodiment of the present invention;
- FIG 9A: is a flow diagram depicting an exemplary method mutation operation performed for generating second set of pattern models, according to the embodiment of the present invention;
- FIG 9B: is a flow diagram depicting an exemplary method of crossover operation performed for generating second set of pattern models, according to an embodiment of the present invention;
- FIG 9C: is a flow diagram depicting an exemplary method speciation operation performed for generating second set of pattern models, according to an embodiment of the present invention;
- FIG 10: is a flow diagram depicting a process flow of generating second set of object detection models using second set of pattern models, according to an embodiment of the present invention;
- FIG 11: is a flow diagram depicting a process flow of evaluation of generated object detection models and selection of optimal object detection models, according to an embodiment of the present invention;
- FIG 12: is a flow diagram depicting a process flow of storing optimal object detection models in a database, according to an embodiment of the present invention;
- FIG 13: is a flow diagram depicting a process flow of selecting optimal objection detection model for a particular point cloud data, according to an embodiment of the present disclosure; and
- FIG. 14: is a process flowchart illustrating an exemplary method of initiating the generation of third set of object detection models when a decrease in accuracy of object detection is detected in a computer-simulated environment, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

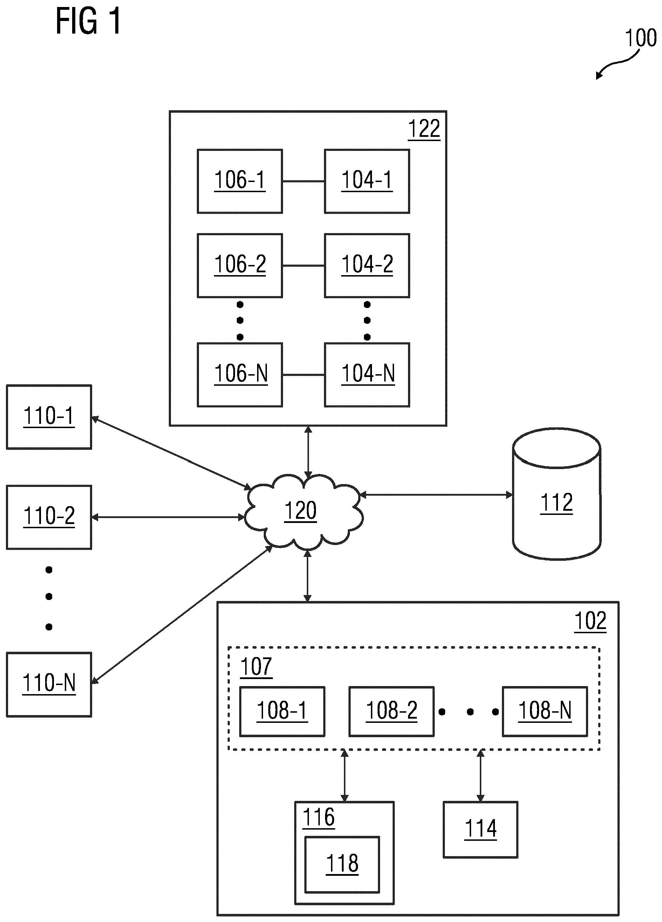

FIG. 1 is a block representation of a system 100 capable of automatically optimizing object detection model for accurately detecting one or more objects in a computer simulated environment, according to an embodiment of the present invention. Particularly, FIG. 1 depicts a computing system 102 which is capable of delivering remote applications for managing a technical installation 122 comprising one or more data acquisition devices 104-1, 104-2, ......, 104-N (individually referred to as the data acquisition device 104, and collectively referred to as the data acquisition devices 104) to capture one or more assets 106-1, 106-2, ......, 106-N (individually referred to as the assets 106, and collectively referred to as the entities 106). As used herein, "computing environment" refers to a processing environment comprising configurable computing physical and logical resources, for example, networks, servers, storage, applications, services, etc., and data distributed over the computing platform. The computing environment 100 provides on-demand network access to a shared pool of the configurable computing physical and logical resources. The computing system 102 may be a public cloud, a private cloud, and/or a hybrid cloud or even an edge system configured to provide dedicated remote services to its users.

The computing system 102 is connected to the technical installation 122 via a communication network 120 (e.g., industrial ethernet or Internet). Throughout the present disclosure, the term "technical installation" 122 refers to plurality of assets connected with each other to achieve a function. The technical installation may be comprised of assets such as industrial machines, industrial devices, industrial controllers, and so forth. Example of technical installation 122 may be a factory with a plurality of assets such as a power plant, wind farm, power grid, manufacturing facility, process plants and so on. The term "technical installation" 122 as used in the preferred embodiments and claims according to the present disclosure should be understood broadly to include not only factory floors, but also other indoor facilities and buildings such as hospitals, office spaces, apartments, complexes, schools, training centres, and so forth. The term "technical installation" 122 may also include other outdoor facilities such as a parking lot, a traffic junction, and vehicles such as airplanes, ships and trucks. The technical installation 122 can be defined as any real-world environment that is to be rendered in the computer simulated environment 107.

The technical installation 122 comprises the assets 106. Throughout the present disclosure, the term "one or more assets" 106 as used herein refers to any device, system, instrument, or machinery manufactured or used in an industry that may be employed for performing an operation. The term "one or more assets" 106 also includes objects, subjects, servers, robots, industrial equipment(s), human, sensors, lighting system, and so on. Example of assets 106 include any machinery in the technical installation/facility 122 such as motors, gears, bearings, shafts, switchgears, rotors, circuit breakers, protection devices, remote terminal units, transformers, reactors, disconnectors, gear-drive, gradient coils, magnets, radio frequency coils etc. The assets 106 may also include automated systems such as automated robots, semi-automated robots, remote-controlled robots, robotic arms, etc. that are employed in the technical installation to perform an operation or task.

The technical installation 122 comprises the data acquisition devices 104. Throughout the present disclosure, the term "one or more data acquisition devices" 104 refer to any electronic device configured for capturing, acquiring, and transmitting data from the technical installation to the computing device 102. In an embodiment, the data acquisition devices 104 may be at least one of: a camera, an image sensor, a scanner, a digital camera, a surveillance camera, a 3D imaging device, or a combination thereof. Notably, the primary function of the data acquisition devices is to acquire visual data from the technical installation such as the factory floor and transmit the acquired data to the computing device 102 for further processing. The data acquisition devices provide the visual data to the computing device 102 as a point cloud data. In some embodiments, the data acquisition devices 104 may not capture the data, but only receive the data from sensors and transmit the point cloud data to the computing device 102. The technical installation 122 comprises one or more sensing units and/or capturing units such as the data acquisition devices 104. The one or more sensing unit may be sensors embedded at multiple positions on/in proximity to the assets 106. The one or more sensing unit may be configured for capturing real-time 3D multimedia raw input data and entity data associated with the one or more assets 106. The real-time 3D multimedia raw input data comprises audio data, video data, image data, environmental data, entity data, and so on. Each of the audio data, video data, image data comprises data frames captured by corresponding the data acquisition devices 104. The object data comprises scene information, audio information of an equipment, audio information of an obstacle, a human, and the like. As used herein the communication network 120, refers to, for example, any wired or wireless network such as the internet, an intranet, that implements Bluetooth^{®} of Bluetooth Sig, Inc., a network that implements Wi-Fi^{®} of Wi-Fi Alliance Corporation, an ultra-wideband communication network (UWB), a wireless universal serial bus (USB) communication network, a communication network that implements ZigBee^{®} of ZigBee Alliance Corporation, a general packet radio service (GPRS) network, a mobile telecommunication network such as a global system for mobile (GSM) communications network, a code division multiple access (CDMA) network, a third generation (3G) mobile communication network, a fourth generation (4G) mobile communication network, a fifth generation (5G) mobile communication network, a sixth generation (6G) mobile communication network, a new radio (NR) communication network, a narrow band internet of things network (NB-IoT), an open radio access network (o-RAN), a long-term evolution (LTE) mobile communication network, a public telephone network, and the like., a local area network, a wide area network, an internet connection network, an infrared communication network, and the like, or a network formed from any combination of these networks.

Further, the computing system 102 is also connected to one or more electronic devices 110-1, 110-2, ...., 110-N (individually referred to as the electronic device 110, and collectively referred to as the electronic devices 110) via the communication network 120. The electronic devices 110 may access the computing system 102 for automatically optimizing object detection model for accurately detecting one or more objects in a computer simulated environment 107. Further, the electronic device 110 may be associated with a user, an individual, an administrator, a vendor, a technician, a worker, a specialist, a healthcare worker, an instructor, a supervisor, a team, an entity, an organization, a company, a facility, a bot, any other user, and combination thereof. The assets 106 may include a user, an object a subject, a device, an equipment, a hardware, an infrastructure, an organization, a facility, a hospital, a healthcare facility, an exercise facility, a laboratory facility, an e-commerce warehouse, a merchant organization, an airline company, a hotel booking company, a company, an outlet, a manufacturing unit, an enterprise, an organization, an educational institution, a secured facility, a warehouse facility, a supply chain facility, a vehicle manufacturing/managing organization, a fleet operating company, any other facility, and the like. The electronic device 110 may be used to provide input and/or receive output to/from the computing system 102, and/or to the database 112, respectively. The electronic device 110 may present to the user one or more user interfaces for the user to interact with the computing system 102 and/or to the database 112 for automatically optimizing object detection model for accurately detecting one or more objects in a computer simulated environment 107. The electronic devices 110 may include an electrical, an electronic, an electromechanical, and a computing device. The computing device may include a mobile, a laptop computer, a desktop computer, a tablet computer, a smartphone, a wearable device, a phablet computer, an augmented reality/virtual reality (AR) device, a metaverse-based device, a personal digital assistant (PDA), and the like. The electronic devices 1102 may access remote applications (such as enabling users to manage occlusions in one or more scenes) via a mobile application, a web browser, a computer application, a portal, a platform, a framework, and the like.

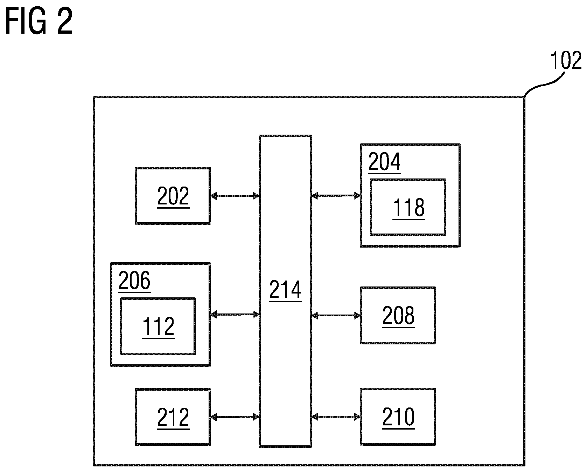

The computing system 102 comprises a processor 114, a memory 116. The memory 116 comprises an object detection model optimization module 118. The computing system 102 further comprises computing platform (not shown), a server (not shown) including hardware resources and an operating system (OS), a network interface, application program interfaces (APIs) (not shown). The network interface enables communication between the computing system 102, the technical installation 122, and the electronic device(s) 110. The interface (not shown in FIG. 1) may allow one or more users (not shown) at the electronic device(s) 110 to access point cloud data stored at the computing system 102 and perform one or more actions on the point cloud data as same instance. The server may include one or more servers on which the OS is installed. The servers may comprise one or more processors, one or more storage devices, such as, memory units, for storing data and machine-readable instructions for example, applications and application programming interfaces (APIs), and other peripherals required for providing computing functionality. The computing platform is a platform which enables functionalities such as data reception, data processing, data rendering, data communication, and the like, using the hardware resources and the OS of the servers and delivers the aforementioned remote services using the application programming interfaces deployed therein. The computing platform may comprise a combination of dedicated hardware and software built on top of the hardware and the OS. The computing platform comprises an object detection model optimization module 118. A detailed view of various components of the computing system 102 is shown in FIG 2. The computing system 102 may be a standalone system, edge system or a system on a cloud. In a preferred embodiment, the computing system 102 is a cloud-based system capable of automatically optimizing object detection model for accurately detecting one or more objects in a computer simulated environment 107.

The computer simulated environment 107 is configured for rendering one or more objects 108-1 to 108-N (collectively referred to as 108, hereinafter). The one or more objects 108 rendered in the computer simulated environment 107 correspond to one or more assets 106 in the technical installation 122.

Throughout the present disclosure, the term "computer simulated environment" 107 as used herein refers to three-dimensional (3D) representation of a real or physical world. It can be understood as a virtual world. The computer-simulated environment is accessible by a user, i.e., it is accessible from the real/physical world. This comprises data exchange between the computer-simulated environment and the real/physical world. In particular, the computer-simulated environment can be understood as the "metaverse". It is also possible to interact with the computer-simulated environment, i.e., to influence or use processes, components, and/or functions in the computer-simulated environment. Therefore, processes in the computer-simulated environment may have direct influence on processes in the real/physical world, e.g., by modelling control processes virtually.

For example, it is possible that a user can access the computer-simulated environment 107 via an interface, e.g., a virtual reality (VR) or augmented reality (AR) interface. The counterpart of the computer-simulated environment does not necessarily have to exist but can be for example a 3D model. It is also possible that physical forces and phenomena, e.g., gravity, are represented in a different way in the computer-simulated environment than in the real world, e.g., gravitational acceleration. For the purpose of this invention, the metaverse is comprised of one or more animated scenes being rendered corresponding to the plurality of entities interacting in the industrial environment.

The metaverse may comprise a plurality of computer-simulated components. The computer simulated components can for example be understood as a representation, in particular a 3D representation, of a real or physical component. A component can for example be a room, a building, an item, or an object. The computer-simulated component can have different functionalities/features, e.g., an access interface. The computer-simulated component further comprises data that are component-specific, e.g., sensor data of a virtual sensor, that can be retrieved for example via the access interface. An access to a computer-simulated component can for example comprise usage, modification, connection to other computer-simulated components, etc. The computer-simulated component can interact with the computer-simulated environment. For the purpose of this invention, the computer-simulated component may be one or more objects being rendered in the computer simulated collaborative environment or metaverse.

The metaverse can be realized by a hosting environment. The hosting environment can be for example be implemented as a cloud environment, an edge-cloud environment and/or on specific devices, e.g., mobile devices. Hereinafter, the term "computer simulated environment" and "metaverse" maybe interchangeably used throughout the disclosure.

Further, the computing environment may include a database 112. The database 112 stores the information relating to the technical installation 122 and the electronic device(s) 110. The database 112 is, for example, a structured query language (SQL) data store or a not only SQL (NoSQL) data store. The database 112 is configured as cloud-based database implemented in the computing environment 100, where computing resources are delivered as a service over the computing platform. The database 112, according to another embodiment of the present invention, is a location on a file system directly accessible by the computing platform. The database 112 is configured to point cloud data, object data, model data, optimization parameters data, one or more optimal object detection models data and so on. The database 112 may be of type of a cloud database, a repository, a monetary database, relational database, and so on. The database 112 is configured to store 3D multimedia data and other artifacts pertaining to the output of the object detection model optimization module 118 or the computer-simulated environment 107.

The computing system 102 may comprise a plurality of servers or processors (also known as 'cloud infrastructure'), which are geographical distributed, connected with each other via the communication network 120. A dedicated platform (hereinafter referred to as 'computing platform') may be installed on the servers/processors for providing above functionality as an application (hereinafter referred to as 'remote application'). The computing platform may comprise a plurality of software programs executed on one or more servers or processors of the computing system 102 to enable delivery of the requested applications to the devices and its users.

Further, the computing system 102 may be implemented by way of a single device or a combination of multiple devices that may be operatively connected or networked together. The computing system 102 may be implemented in hardware or a suitable combination of hardware and software. The computing system 102 comprises one or more hardware processor(s) 114, and the memory 116. The memory 116 may include the object detection model optimization module 118. The system 102 may be a hardware device including the hardware processor 114 executing machine-readable program instructions for automatically optimizing object detection model for accurately detecting one or more objects in a computer simulated environment 107. Execution of the machine-readable program instructions by the hardware processor 114 may enable the computing system 102 to manage occlusions in one or more scenes rendered in a computer-simulated environment. The "hardware" may comprise a combination of discrete components, an integrated circuit, an application-specific integrated circuit, a field-programmable gate array, a digital signal processor, or other suitable hardware. The "software" may comprise one or more objects, agents, threads, lines of code, subroutines, separate software applications, two or more lines of code, or other suitable software structures operating in one or more software applications or on one or more processors.

The one or more hardware processors 114 may include, for example, microprocessors, microcomputers, microcontrollers, digital signal processors, central processing units, state machines, logic circuits, and/or any devices that manipulate data or signals based on operational instructions. Among other capabilities, hardware processor 114 may fetch and execute computer-readable instructions in the memory 116 operationally coupled with the computing system 102 for performing tasks such as data processing, input/output processing, and/or any other functions. Any reference to a task in the present disclosure may refer to an operation being or that may be performed on data.

Though few components and subsystems are disclosed in FIG. 1, there may be additional components and subsystems which is not shown, such as, but not limited to, ports, routers, repeaters, firewall devices, network devices, databases, network attached storage devices, servers, assets, machinery, instruments, facility equipment, emergency management devices, image capturing devices, sensors, vehicle communication infrastructure devices, any other devices, and combination thereof. The person skilled in the art should not be limiting the components/subsystems shown in FIG. 1. Although FIG. 1 illustrates the computing system 102, and the electronic devices 110 connected to the database 112, one skilled in the art can envision that the computing system 102, and the electronic devices 110 can be connected to databases, servers, via the communication network 120.

Those of ordinary skilled in the art will appreciate that the hardware depicted in FIG. 1 may vary for particular implementations. For example, other peripheral devices such as an optical disk drive and the like, local area network (LAN), wide area network (WAN), wireless (e.g., wireless-fidelity (Wi-Fi)) adapter, graphics adapter, disk controller, input/output (I/O) adapter, Internet of Things (IoT) devices, digital twin devices, Artificial Intelligence (AI)/ Machine Learning (ML) devices may also be used in addition or in place of the hardware depicted. The depicted example is provided for explanation only and is not meant to imply architectural limitations concerning the present disclosure.

Those skilled in the art will recognize that, for simplicity and clarity, the full structure and operation of all data processing systems suitable for use with the present disclosure are not being depicted or described herein. Instead, only so much of the system 100 as is unique to the present disclosure or necessary for an understanding of the present disclosure is depicted and described. The remainder of the construction and operation of the computing system 102 may conform to any of the various current implementations and practices that were known in the art.

In an exemplary embodiment, the computing system 102 may receive a three-dimensional (3D) multimedia data corresponding to one or more assets to be rendered in the computer-simulated environment 107 as objects 108, from the one or more data acquisition devices 104. Examples of the 3D multimedia data include 3D models, 3D animations, virtual reality/augmented reality (VR/AR) environments, metaverse data, 3D renderings, 3D imaging, and 3D prototypes. Further, the received 3D multimedia data comprises a point cloud input data associated with the computer-simulated environment 102. Point cloud data is a collection of data points in three-dimensional space, typically representing the external surface of an object or environment. Each point in a point cloud has its own set of coordinates (X, Y, Z) and sometimes additional attributes like colour, intensity, or normal vectors. These data points are captured by various sensors, such as LiDAR, 3D scanners, or photogrammetry systems, and are used to create detailed 3D models or maps of the physical world. Point cloud data may be used in applications such as 3D modelling, geographic information systems (GIS), autonomous driving, factory setup, technical installation, and virtual/augmented reality, where accurate spatial representation is essential.

Point cloud input data can originate from various sources and be categorized into different types based on how the data is captured or generated. The point cloud input data may comprise light detection and ranging (LiDAR) Data, photogrammetry data, 3D scanning data, synthetic data, radar data, sonar data, computed tomography (CT) scan data, and so on. Additional examples of point cloud input data include terrestrial laser scanning, airborne laser scanning, stereo vision systems, and so on. Point cloud data can also be generated from drone-based LiDAR or photogrammetry, hyperspectral imaging, and time-of-flight (ToF) cameras, for depth sensing. Further, the point cloud data comprises one or more objects in a real-world environment associated with the assets 106 technical installation 122.

The computing system 102 is configured for automatically optimizing object detection model for accurately detecting one or more objects in a computer simulated environment. The object detection model may not be optimized for a particular scene of objects in the metaverse, and hence the computing system is configured for optimizing a given object detection model. The computing system 102 is configured for receiving point cloud data pertaining to a real-world scene having one or more objects therein corresponding to one or more assets in a technical installation. The computing system 102 is configured for extracting one or more features from individual points in the point cloud data, wherein the one or more features correspond to one or more properties of the one or more objects. The computing system 102 is configured for selecting a base object detection model based on the extracted features. The selection is based on a probability of accurate object detection when the base object detection model is executed on the point cloud data. The computing system 102 is configured for generating a first set of pattern models from the base object detection model. Each of the pattern models in the first set of pattern models identify symmetries and patterns from the point cloud data. The computing system 102 is configured for determining a first set of model optimization parameters for updating the base object detection model based on the results of the execution of pattern models on the point cloud data, to obtain a first set of object detection models. The computing system 102 is configured for evaluating a performance of each of first set of pattern models by calculating a fitness score based on an accuracy of object detection task performed by the corresponding object detection model in the first set of object detection models. The computing system 102 is configured for iteratively generating a second set of pattern models and corresponding second set of optimization parameters to obtain a second set of object detection models, until a target criteria is satisfied. The target criteria is identifying a pattern model and corresponding optimization parameters that when executed on the point cloud data using the updated object detection model, outputs a fitness score above a predefined threshold fitness score. Each of the pattern models in the second set of pattern models identify symmetries and patterns from the point cloud data. The computing system 102 is configured for identifying one or more optimized object detection models from the second set of object detection models or first set of object detection models based on a pre-defined level of accuracy for object detection tasks to be performed on the point cloud data. The computing system 102 is configured for performing object detection tasks on the received point cloud data, using the one or more optimized object detection models.

In an embodiment, the computing system 102 is configured for determining the first set of model optimization parameters. The first set of model optimization parameters are determined by generating a first set of patterns from the point cloud data by executing the generated first set of pattern models on the point cloud data, wherein the first set of patterns comprises at least one of: spatial arrangements, object symmetries, orientation patterns, object scaling variations, and relational patterns between the objects. Further, the computing system 102 is configured for determining the first set of model optimization parameters for updating the base object detection model based on the generated first set of patterns. The first set of model optimization parameters comprises at least one of: number of layers of nodes in the first set of pattern models, number of nodes in each layer in the first set of pattern models, connections between nodes of the first set of pattern models, and weights of each connection of the first set of pattern models.

In an embodiment, the computing system 102 is configured for generating the first set of object detection models by updating, by the processing unit, one or more initial parameters of the base object detection model with one or more model optimization parameters in the first set of model optimization parameters. The one or more model optimization parameters correspond to each pattern model in the first set of pattern models. Further, the computing system 102 is configured for generating the first set of object detection models corresponding to the first set of model optimization parameters comprising one or more model optimization parameters determined for each pattern model in the first set of pattern models.

In an embodiment, the computing system 102 is configured for evaluating the performance of each of first set of pattern models by executing each of the first set of object detection models on the point cloud data and calculating a fitness score for each of the first set of pattern models corresponding to respective first set of object models, wherein the fitness score is calculated based on an accuracy of object detection task of the respective first set of object detection models.

In an embodiment, the computing system 102 is configured for determining the second set of model optimization parameters by generating a second set of patterns from the point cloud data by executing the generated second set of pattern models on the point cloud data, wherein the second set of patterns comprises at least one of: spatial arrangements, object symmetries, orientation patterns, object scaling variations, and relational patterns between the objects. Further, the computing system 102 is configured for determining the second set of model optimization parameters for updating the first set of object detection models based on the generated second set of patterns. The second set of parameters comprises at least one of: number of layers of nodes in the second set of pattern models, number of nodes in each layer in the second set of pattern models, connections between nodes of the second set of pattern models, and weights of each connection of the second set of pattern models.

In an embodiment, the computing system 102 is configured for generating the second set of object detection models by updating one or more parameters of each of the first set of object detection models with one or more model optimization parameters in the second set of model optimization parameters, wherein the one or more model optimization parameters correspond to each pattern model in the second set of pattern models. Further, the computing system 102 is configured for generating the second set of object detection models corresponding to the second set of model optimization parameters comprising one or more model optimization parameters determined for each pattern model in the second set of pattern models.

In an embodiment, the computing system 102 is configured for evaluating the performance of each of second set of pattern models by executing each of the second set of object detection models on the point cloud data and calculating a fitness score for each of the second set of pattern models corresponding to respective second set of object models. The fitness score is calculated based on an accuracy of object detection task of the respective second set of object detection models.

In an embodiment, the computing system 102 is configured for identifying one or more optimized object detection models from the first set of object detection models by selecting the one or more object detection models from the first set of object detection models corresponding to the pattern model from the first set of pattern models having a highest fitness score, if the first set of pattern models comprises at least one pattern model with a fitness score above the predefined threshold fitness score.

In an embodiment, the computing system 102 is configured for identifying one or more optimized object detection models from the second set of object detection models by selecting the one or more object detection models from the second set of object detection models corresponding to the pattern model from the second set of pattern models having a highest fitness score, if the second set of pattern models comprises at least one pattern model with a fitness score above the predefined threshold fitness score.

In an embodiment, the computing system 102 is configured for generating the first set of pattern models by randomizing architecture of the base object detection model, each architecture comprising random network topology of different layers of nodes, connection between each layer of nodes, and corresponding weights of each connection between nodes.

In an embodiment, the computing system 102 is configured for generating the second set of pattern models by selecting top performing pattern models from the first set of pattern models, wherein the first set of pattern models when evaluated on the base object detection model have the fitness score below the predefined threshold fitness score. Further, the computing system 102 is configured for generating the second set of pattern models from the top performing models using crossover, mutation and speciation techniques of neuro-evolution algorithms. The second of pattern models correspond to architectures having a new population of pattern models generated based on patterns learned from the point cloud data using the first set of pattern models.

In an embodiment, the computing system 102 is configured for selecting the top performing pattern models by ranking the first set of pattern models based on the calculated fitness score in a descending order and discarding last two pattern models from the first set of pattern models having lowest ranking in the order.

In an embodiment, the computing system 102 is configured for generating the second set of pattern models using neuro-evolution algorithm by identifying network topology with parameters such as nodes and weights, of each the top performing models and then mixing different pairs of the top performing models based on the identified network topology using crossover operation in order to generate the second set of pattern models, each having a novel architecture of the network topology.

In an embodiment, the computing system 102 is configured for generating the second set of pattern models using neuro-evolution algorithm by identifying network topology with parameters such as nodes and weights, of each the top performing pattern models and introducing random changes to each of the top performing pattern models using mutation operation in order to generate the second set of pattern models, each having novel a novel architecture. The random changes comprise at least one of: addition of a node, deletion of a node, addition of a connection, deletion of a connection, addition of a layer, and deletion of a layer.

In an embodiment, the computing system 102 is configured for generating the second set of pattern models using neuro-evolution algorithms by classifying the top performing pattern models into different groups based on a specie of the pattern models. The top performing pattern models having a topological similarity are clustered together. The computing system 102 is configured for evolving the pattern models from each of the cluster using speciation operation in order to generate the second set of pattern models, each having novel a novel architecture.

In an embodiment, the computing system 102 is configured for identifying identify symmetries and patterns from each of the pattern models in the first set of pattern models and the second set of pattern models from the point cloud data pertaining to at least one of: object placement, object orientation, object scale, object relationships, and spatial distribution.

In an embodiment, the computing system 102 is configured for receiving the point cloud data by receiving a three-dimensional (3D) multimedia data corresponding to one or more scenes to be rendered in the computer-simulated environment (120), from one or more data acquisition devices (104).

In an embodiment, the computing system 102 is configured for extracting one or more features from the point cloud data further comprises removing anomalies from the point cloud data. The anomalies are at least one of: outliers, noise, missing data points, duplicate points, or irrelevant artifacts that do not represent the true geometry or structure of the objects within the environment.

In an embodiment, the computing system 102 is configured for performing object detection tasks on the received point cloud data, using the optimized object detection model further comprises validating an accuracy of the optimized object detection model by executing the optimized object detection model on the received point cloud data.

In an embodiment, the computing system 102 is configured for detecting, a substantial change in one or more features of the received point cloud data pertaining to one or more scenes of the computer simulated environment, wherein the substantial change corresponds to a decrease in accuracy of a current object detection model in execution; and

In an embodiment, the computing system 102 is configured for iteratively generating a third set of pattern models and corresponding third set of optimization parameters to obtain a third set of object detection models, until a target criteria is satisfied. The target criteria is identifying a pattern model and corresponding optimization parameters that when executed on the point cloud data using the updated object detection model, outputs a fitness score above a predefined threshold fitness score, when the substantial change in the one or more features of the point cloud data is detected.

In an embodiment, the computing system 102 is configured for storing a plurality of optimized object detection models generated for a plurality of point cloud data against one or more features extracted from respective point clouds in a database. Further, the computing system 102 is configured for mapping, a new point cloud data to one of the optimized object detection models stored in the database based on a similarity of extracted one or more features from the new point cloud data to the one or more features stored in the database.

FIG. 2 is a block diagram of a computing system 102 such as those shown in FIG. 1, depicting various components to implement embodiments of the present invention. In FIG. 2, the computing system 102 comprises a processor(s) 202, an accessible memory 204 comprising an object detection model optimization module 118, a storage unit 206 comprising the database 112, a network interface 208, an input 210, an output unit 212 and a bus 214.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 comprises the object detection model optimization module 118stored in the form of machine-readable instructions on any of the above-mentioned storage media and may be in communication with and executed by the processor(s) 202.

When executed by the processor(s) 202, the object detection model optimization module 118 causes the processor(s) 202 to automatically optimizing object detection model for accurately detecting one or more objects 108 in a computer simulated environment 102. The object detection model optimization module 118causes the processor(s) 202 to receive point cloud data pertaining to a real-world scene having one or more objects 108 therein corresponding to one or more assets in a technical installation.

In an embodiment, receiving the point cloud data comprises receiving a three-dimensional (3D) multimedia data corresponding to one or more scenes to be rendered in the computer-simulated environment 102 from one or more data acquisition devices 104.

The received 3D multimedia data comprises a point cloud input data associated with the computer-simulated environment 102. Further, the one or more scenes comprise one or more assets 106 in a real-world environment. Further, the object detection model optimization module 118causes the processor(s) 202 to optimize the object detection of one or more objects in the received point cloud data using one or more Neural Networks (NNs) in order to improve the accuracy of the object detection task based on the identified scene in the computer simulated environment 102.

The object detection model optimization module 118 causes the processors 202 to extract one or more features from individual points in the point cloud data, wherein the one or more features correspond to one or more properties of the one or more objects. The one or more features can be geometric features of the objects in the point cloud data, structural features of the objects in the point cloud data, colour and/or intensity features of the objects in the point cloud data. The geometric features are calculated for each individual point or its immediate neighbourhood. The structural features are derived from groups of points that likely belong to the same object or part of an object. The colour and intensity-Based Features includes colour or intensity information (e.g., from RGB cameras or LiDAR intensity). In an embodiment, the one or more features comprises at least of: Point Coordinates (XYZ), Surface Normals, Curvature, RGB Values, Intensity Values, Connectivity, Neighborhood Relationships, Temporal Consistency, Bounding Boxes or Envelopes, Shape Descriptors, Spatial Relationships. In an embodiment, extracting one or more features from the point cloud data further comprises removing anomalies from the point cloud data, wherein anomalies are at least one of: outliers, noise, missing data points, duplicate points, or irrelevant artifacts that do not represent the true geometry or structure of the objects within the environment.

In yet another exemplary embodiment, for receiving the point cloud data pertaining to a real-world scene having one or more objects therein corresponding to one or more assets, the object detection model optimization module 118 causes the processor(s) 202 to generate a synchronized 3D multimedia data by synchronizing the point cloud data received from the one or more data acquisition devices 104, with a pre-defined point cloud data. The one or more data acquisition devices 104 comprises at least one of a Light Detection and Ranging (LIDAR) sensor, a Radio Detection and Ranging (RADAR) sensor, a Red Green Blue (RGB) depth sensor, stereo camera, a camera, and the like. Further, the object detection model optimization module 118 causes the processor(s) 202 to pre-process the synchronized point cloud data. Preprocessing the point cloud data comprises filtering a noise data from the point cloud data. Furthermore, the object detection model optimization module 118 causes the processor(s) 202 to filter one or more outlier data points from the point cloud data, using at least one of a distance-based filtering technique and a range-based filtering technique. One or more outlier data points correspond to a value exceeding at least one of a pre-defined distance and a pre-defined range. Additionally, the object detection model optimization module 118 may causes the processor(s) 202 to generate a voxel grid visualization data by converting the point cloud data into the voxel grid visualization data. The voxel (short for "volume elements") grid visualization is a method for representing three-dimensional (3D) data by dividing the space into small, discrete units called voxels, which are the 3D equivalent of pixels in a 2D image. Each voxel occupies a specific volume in the 3D space and can store detailed information about that region, such as colour, density, or material properties. This technique allows for a structured and detailed representation of complex 3D objects or scenes, making it particularly useful in fields like computer graphics, medical imaging, and scientific simulations. By visualizing data as a grid of voxels, intricate 3D structures can be rendered and analysed with precision, enabling a clearer understanding of the underlying spatial patterns and characteristics.

Further, the object detection model optimization module 118 causes the processor(s) 202 to down-sample the generated voxel grid visualization data to optimize a density of the one or more outlier data points in the received point cloud input data. Furthermore, the object detection model optimization module 118 causes the processor(s) 202 to store, in a database 112, the pre-processed point cloud input data represented in a three-dimensional (3D) space, based on the down-sampling of the voxel grid visualization data.

In yet another exemplary embodiment, the object detection model optimization module 118 causes the processor(s) 202 to retrieve the pre-processed point cloud input data represented in the 3D space, from the database 112. Further, the object detection model optimization module 118 causes the processor(s) 202 to generate one or more feature maps corresponding to the pre-processed point cloud input data by performing a region of interest (RoI) pooling on the pre-processed point cloud input data. Furthermore, the object detection model optimization module 118 causes the processor(s) 202 to detect one or more candidate objects within the RoI corresponding to the generated one or more feature maps, using one or more Convolutional Neural Networks (CNNs).

The object detection model optimization module 118 causes the processors 202 to select a base object detection model based on the extracted features, wherein the selection is based on a probability of accurate object detection when the base object detection model is executed on the point cloud data. The term "object detection model" as used herein refers to an artificial intelligence (AI) model designed to identify and localize specific objects within the computer simulated environment. The object detection models take as input data representing the metaverse scene (which can include point clouds, meshes, textured 3D models, or a combination thereof) and output information about the presence, location, and potentially the class (e.g., avatar, chair, building, interactive element) of objects within that scene. A particular object detection model is selected for further processing and optimization based on the features extracted from the point cloud data. The term "base object detection model" as used herein refers to any initial object detection model selected automatically or manually by the user for the received point cloud data. The object detection model optimization module 118 causes the processors 202 to select the base object detection model based on several factors such as data format of the point cloud, type of objects in the point cloud, desired accuracy rate of detection, performance requirements like latency, available computational resources. Based on a probability of accurate object detection as required by the user, the base object detection model is then selected from one or more available object detection models for further processing.

The object detection model optimization module 118 causes the processors 202 to generate a first set of pattern models from the base object detection model. Herein, each of the pattern models in the first set of pattern models identify symmetries and patterns from the point cloud data. In an embodiment, the first set of pattern models are generated by randomizing architecture of the base object detection model. Herein, each architecture comprises random network topology of different layers of nodes, connection between each layer of nodes, and corresponding weights of each connection between nodes. In an example, "N" number of pattern models are generated from the base object detection model by introducing random changes to the architecture of the base object detection model in order to generate the first set of pattern models. In another example, "N" random architectures are generated from a random seed (and not using the base object detection model as a seed). The base object detection model serves as a "substrate" on which the first set of pattern models are executed to generate patterns. In an example, the first set of pattern models is a Compositional Pattern Producing Network (CPPN). CPPN is a type of artificial neural network that serves as an indirect encoding method. Herein, instead of directly specifying the parameters of a target neural network, a CPPN takes as input the coordinates or relationships between nodes in a conceptual "substrate" space and outputs properties of the connections (e.g., weight, existence) or nodes themselves within that substrate. By using a composition of mathematical functions as activation functions, CPPNs can generate complex and often regular or symmetrical patterns of connectivity and parameters for the target network, enabling the evolution of intricate architectures from a relatively compact representation. Notably, the first set of pattern models are configured to identify symmetries and patterns in the point cloud data having one or more objects therein. The symmetries and patterns are identified from the point cloud data based on the extracted features of the point cloud data and the output of the base object detection model when input with the point cloud data. In an embodiment, each of the pattern models in the first set of pattern models identify symmetries and patterns from the point cloud data pertaining to at least one of: object placement, object orientation, object scale, object relationships, and spatial distribution. It is to be understood that the pattern models are configured to identify symmetries in the point cloud data and then update the object detection model accordingly such that the accuracy of object detection is improved and also latency for object detection task is reduced.

The object detection model optimization module 118 causes the processors 202 to determine a first set of model optimization parameters for updating the base object detection model based on the results of the execution of pattern models on the point cloud data, to obtain a first set of object detection models. Based on the pattern and symmetries identified by the pattern models, one or more optimization parameters are determined for each patter model, referred to as "the first set of optimization parameters". In an embodiment, object detection model optimization module 118 causes the processors 202 to determine the first set of model optimization parameters comprises Generating a first set of patterns from the point cloud data by executing the generated first set of pattern models on the point cloud data. Herein, the first set of patterns comprises at least one of: spatial arrangements, object symmetries, orientation patterns, object scaling variations, and relational patterns between the objects in the received point cloud data. Further, object detection model optimization module 118 causes the processor 202 to determine the first set of model optimization parameters for updating the base object detection model based on the generated first set of patterns. Herein, the first set of model optimization parameters comprises at least one of: number of layers of nodes in the first set of pattern models, number of nodes in each layer in the first set of pattern models, connections between nodes of the first set of pattern models, and weights of each connection of the first set of pattern models.

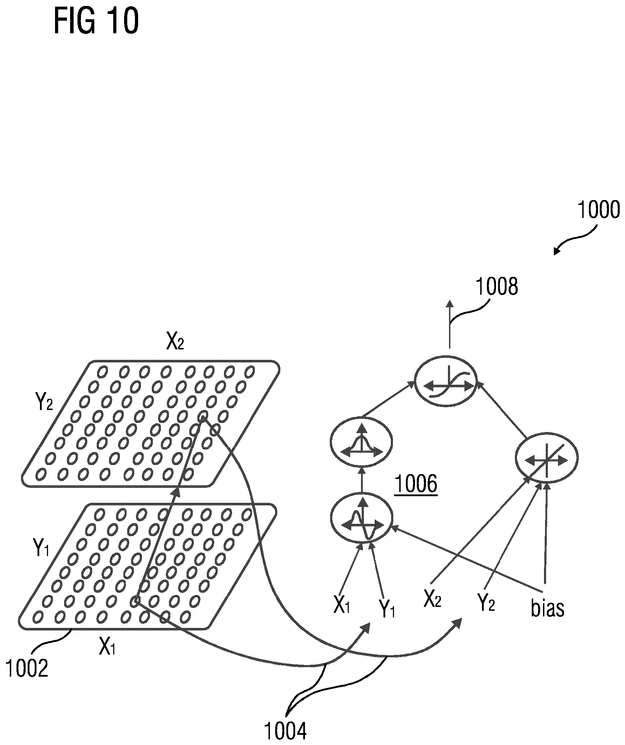

In an example, the first set of pattern models are configured to identify symmetries in the received point cloud data The patterns are identified in the substrate for each pattern model in the first set of pattern models by determining architecture and weights of a target neural network, each of the pattern model is queried for every possible connection between nodes in the substrate. In an example, for each pattern model, for each potential connection (from a source node at coordinates (x1, y1) to a target node at (x2, y2)), the pattern model takes (x1, y1, x2, y2, distance) (or a similar set of inputs) and outputs the connection weight which is the first optimization parameter. If the output weight (first optimization parameter) is above a certain threshold, a connection is established in the target neural network. The strength of the connection is determined by the output value. Such a connection relationship is shown in FIG 10. Referring to FIG 10, illustrated is a flow diagram 1000 depicting generation of connection between nodes in the substrate 1002, according to an embodiment of the present invention. Each coordinate pair (for example, x1, y1 and x2, y2) depicted as 1004 is fed into the CPPN depicted as 1006. The CPPN 1006 outputs the weight of the connections depicted as 1008.

In an embodiment, the object detection model optimization module 118 causes the processor(s) 202 to generate the first set of object detection models by updating one or more initial parameters of the base object detection model with one or more model optimization parameters in the first set of model optimization parameters. Herein the one or more model optimization parameters correspond to each pattern model in the first set of pattern models. Further, the object detection model optimization module 118 causes the processor(s) 202 to generate the first set of object detection models corresponding to the first set of model optimization parameters comprising one or more model optimization parameters determined for each pattern model in the first set of pattern models. In an example, a new instance of object detection model is generated by updating the parameters such as weights of connection between nodes as obtained from the output of the first set of pattern models. It is to be understood that "N" object detection models are generated corresponding to "N" pattern models updated with parameters determined form the pattern models.

The object detection model optimization module 118 causes the processors 202 to evaluate a performance of each pattern model in the first set of pattern models by calculating a fitness score based on an accuracy of object detection task performed by the corresponding object detection model in the first set of object detection models. It is to be understood that the first set of object detection models that have been updated with determined first set of optimization parameters are then executed on the base object detection model to evaluate the performance of each of the pattern models. In an embodiment, evaluating the performance of each of first set of pattern models comprises executing each of the first set of object detection models on the point cloud data. Furthermore, a fitness score is calculated for each of the first set of pattern models corresponding to respective first set of object models. Notably, the fitness score is calculated based on an accuracy of object detection task of the respective first set of object detection models. The fitness score is a quantitative measure of the accuracy of the object detection models when executed on the point cloud data. The fitness score is calculated for each pattern model.

The object detection model optimization module 118 causes the processors 202 to iteratively generate a second set of pattern models and corresponding second set of optimization parameters to obtain a second set of object detection models until a target criteria is satisfied. The target criteria is identifying a pattern model and corresponding optimization parameters that when executed on the point cloud data using the updated object detection model, outputs a fitness score above a predefined threshold fitness score. Herein, each of the pattern models in the second set of pattern models identify symmetries and patterns from the point cloud data. It is to be understood that the "second set of pattern models" is team used to refer to all set of pattern models iteratively generated until the target criteria is met. The second set of pattern models are generated until one of the pattern models have the fitness score above the predefined threshold, thereby ensuring that the corresponding object detection models is the optimized object detection model for the given point cloud data.

In an embodiment, the object detection model optimization module 118 causes the processors 202 to select top performing pattern models from the first set of pattern models. Herein, the first set of pattern models when evaluated on the base object detection model have the fitness score below the predefined threshold fitness score. In an embodiment, the top performing pattern models are selected by ranking the first set of pattern models based on the calculated fitness score in a descending order and then discarding last two pattern models from the first set of pattern models having lowest ranking in the order.

In an example, all the pattern models from the first set of pattern models are ranked based on their fitness score. It is to be understood, higher the fitness score, better is accuracy of object detect detection of the corresponding object detection model. Hence, the top performing pattern models are selected from the first set of pattern models based on their ranking, for example last two least ranked models are discarded to be part of the next population of the pattern models due to their inaccuracies or low performance in object detection on the point cloud data. Furthermore, the object detection model optimization module 118 causes the processors 202 to the second set of pattern models from the top performing models using crossover, mutation and speciation techniques of neuro-evolution algorithms. Notably, the second of pattern models correspond to architectures having a new population of pattern models generated based on patterns learned from the point cloud data using the first set of pattern models.

In an embodiment, the second set of pattern models are generated using neuro-evolution algorithm. Neuro-evolution algorithms are a class of evolutionary computation techniques that are used to evolve artificial neural networks. Unlike traditional supervised learning methods that rely on gradient descent to train a fixed network architecture, neuro-evolution algorithms use principles inspired by natural selection to search for both the optimal architecture and the connection weights of a neural network for a given task. There are several operations used in neuro-evolution algorithm that can be used to generate next population of second set of pattern models.

In an embodiment, the second set of pattern models are generated from the first set of pattern models using a crossover operation. The object detection model optimization module 118 causes the processors 202 to identify network topology with parameters such as nodes and weights, of each the top performing models from the first set of pattern models. Further, pairs of the top performing models are mixed based on the identified network topology using crossover operation in order to generate the second set of pattern models, each having a novel architecture of the network topology. It is to be noted that the crossover operation (also known as recombination) is a genetic operator that takes two or more parent neural networks from the current population (herein, the first set of pattern models) and combines their genetic information to produce one or more offspring networks (herein, second pattern models) for the next generation. The goal of crossover is to create new individuals that inherit potentially beneficial traits from both parents, thereby accelerating the evolutionary search process towards better solutions.

In an embodiment, the second set of pattern models are generated from the first set of pattern models using a mutation operation. The object detection model optimization module 118 causes the processors 202 to identify network topology with parameters such as nodes and weights, of each the top performing pattern models. Further, random changes are introduced to each of the top performing pattern models using mutation operation in order to generate the second set of pattern models, each having novel a novel architecture. Herein, random changes comprise at least one of: addition of a node, deletion of a node, addition of a connection, deletion of a connection, addition of a layer, and deletion of a layer. It is to be understood that the mutation operation is a genetic operator that introduces small, random changes to the genome of an offspring network (which might have been created through crossover or directly selected for reproduction). The primary purpose of mutation is to introduce diversity into the population and to explore new regions of the search space that might not be reachable through crossover alone. It helps prevent premature convergence to suboptimal solutions and allows the evolutionary process to discover novel and potentially advantageous network structures or parameter values.

In an embodiment, the second set of pattern models are generated from the first set of pattern models using a speciation operation. The object detection model optimization module 118 causes the processors 202 classify the top performing pattern models into different groups based on a specie of the pattern models. Herein, top performing pattern models having a topological similarity are clustered together. Further, the pattern models are evolved from each of the cluster using speciation operation in order to generate the second set of pattern models, each having novel a novel architecture. Is it to be noted that speciation is a mechanism used to divide the population of evolving neural networks into distinct groups called species based on their genetic similarity. The primary goal of speciation is to promote diversity within the population and to protect innovative or promising but not yet fully optimized individuals from being eliminated by more mature but potentially less adaptable individuals.

In an embodiment, the object detection model optimization module 118 causes the processors 202 to identify symmetries and patterns using the second set of pattern models from the point cloud data pertaining to at least one of: object placement, object orientation, object scale, object relationships, and spatial distribution.

In an embodiment, the object detection model optimization module 118 causes the processors 202 to determine the second set of model optimization parameters. Further, the object detection model optimization module 118 causes the processors 202 to generating a second set of patterns from the point cloud data by executing the generated second set of pattern models on the point cloud data. Herein, the second set of patterns comprises at least one of: spatial arrangements, object symmetries, orientation patterns, object scaling variations, and relational patterns between the objects.

In an example, the second set of pattern models are configured to identify symmetries in the received point cloud data The patterns are identified in the first set of objection detection models for each pattern model in the second set of pattern models by determining architecture and weights of a target neural network, each of the pattern model is queried for every possible connection between nodes in the corresponding first set of object detection models. In an example, for each pattern model, for each potential connection (from a source node at coordinates (x1, y1) to a target node at (x2, y2)), the pattern model takes (x1, y1, x2, y2, distance) (or a similar set of inputs) and outputs the connection weight which is the first optimization parameter. If the output weight (first optimization parameter) is above a certain threshold, a connection is established in the target neural network. The strength of the connection is determined by the output value.

In an embodiment, the object detection model optimization module 118 causes the processors 202 to determine the second set of model optimization parameters for updating the first set of object detection models based on the generated second set of patterns. In an embodiment, the second set of parameters comprises at least one of: number of layers of nodes in the second set of pattern models, number of nodes in each layer in the second set of pattern models, connections between nodes of the second set of pattern models, and weights of each connection of the second set of pattern models.

In an embodiment, the object detection model optimization module 118 causes the processors 202 to generate the second set of object detection models by updating one or more parameters of each of the first set of object detection models with one or more model optimization parameters in the second set of model optimization parameters. Herein, the one or more model optimization parameters correspond to each pattern model in the second set of pattern models. Further, the second set of object detection models are generated corresponding to the second set of model optimization parameters comprising one or more model optimization parameters determined for each pattern model in the second set of pattern models. In an example, a new instance of object detection model is generated by updating the parameters such as weights of connection between nodes as obtained from the output of the second set of pattern models. It is to be understood that "N" object detection models are generated corresponding to "N" pattern models in the second set of pattern models updated with parameters determined form the pattern models. It is to be noted that the "N" object detection models are iteratively generated until the target criteria of accurately performing the task of object detection on the point cloud data is met.

In an embodiment, the object detection model optimization module 118 causes the processors 202 to evaluate the performance of each of second set of pattern models. The performance of each of the second set of pattern models is evaluated by executing each of the second set of object detection models on the point cloud data. In an embodiment, the object detection model optimization module 118 causes the processors 202 to evaluate the performance of each of second set of pattern models by executing each of the second set of object detection models on the point cloud data. Further, a fitness score is calculated for each of the second set of pattern models corresponding to respective second set of object models. Herein, the fitness score is calculated based on an accuracy of object detection task of the respective second set of object detection models.

The object detection model optimization module 118 causes the processors 202 to identify one or more optimized object detection models from the second set of object detection models or first set of object detection models based on a pre-defined level of accuracy for object detection tasks to be performed on the point cloud data. The optimized object detection models are selected based on the evaluation of fitness score of the first set of pattern models. In an embodiment, object detection model optimization module 118 causes the processors 202 to select the one or more object detection models from the first set of object detection models corresponding to the pattern model from the first set of pattern models having a highest fitness score, if the first set of pattern models comprises at least one pattern model with a fitness score above the predefined threshold fitness score. In an embodiment, object detection model optimization module 118 causes the processors 202 to selecting, the one or more object detection models from the second set of object detection models corresponding to the pattern model from the second set of pattern models having a highest fitness score, if the second set of pattern models comprises at least one pattern model with a fitness score above the predefined threshold fitness score. It is to be understood that the process of selection of final optimized object detection models is iterative and as and when the target criteria of predefine level of accuracy of object detection tasks is met, the final selection is made for the optimized object detection models.

The object detection model optimization module 118 causes the processors 202 to perform the object detection tasks on the received point cloud data, using the one or more optimized object detection models. In the context of the present invention, the term "object detection tasks" as used herein refers to computational processes performed by an object detection model to identify and locate specific objects of interest within the received point cloud data representing a metaverse environment (or a real-world scene corresponding to it). In an embodiment, the object detection model optimization module 118 causes the processors 202 to validate an accuracy of the optimized object detection model by executing the optimized object detection model on the received point cloud data. It is to be understood that the accuracy of the selected optimized object detection model is validated by executing the optimized model on the point cloud data. In an embodiment, object detection model optimization module 118 causes the processors 202 to detect a substantial change in one or more features of the received point cloud data pertaining to one or more scenes of the computer simulated environment. Herein, the substantial change corresponds to a decrease in accuracy of a current object detection model in execution. It is to be noted that the point cloud data is a variable and may change as the scene progresses from time t1 to t2, hence it is possible that the selected optimized object detection model for the metaverse objects is not optimal at all times. Therefore, the object detection model optimization module 118 causes the processors 202 to continuously monitor the accuracy of the object detection task for the received point cloud data. Furthermore, the object detection model optimization module 118 causes the processors 202 to iteratively generate a third set of pattern models and corresponding third set of optimization parameters to obtain a third set of object detection models until a target criteria is satisfied. Herein, the target criteria is identifying a pattern model and corresponding optimization parameters that when executed on the point cloud data using the updated object detection model, outputs a fitness score above a predefined threshold fitness score, when the substantial change in the one or more features of the point cloud data is detected. It is to be understood that the object detection model optimization module 118 causes the processors 202 to initiate iteration of finding optimized object detection models for the new point cloud data by generating third set of pattern models and corresponding third set of optimization parameters in order to obtain third set of detection models until an accuracy of object detection task performed by object detection model selected form the third set of detection models is above a predefined threshold.

In an embodiment, the object detection model optimization module 118 causes the processors 202 to store a plurality of optimized object detection models generated for a plurality of point cloud data against one or more features extracted from respective point clouds in a database 112. In an embodiment, the object detection model optimization module 118 causes the processors 202 map a new point cloud data to one of the optimized object detection models stored in the database based on a similarity of extracted one or more features from the new point cloud data to the one or more features stored in the database. It is to be understood that the database comprising plurality of optimized object detection models corresponding to one or more features from respective point clouds is capable of automatically recommending the optimized object detection model with accuracy above the predefined threshold for the given new point cloud data.

The input-output unit 210 may include input devices a keypad, touch-sensitive display, camera (such as a camera receiving gesture-based inputs), and the like, capable of receiving one or more input signals, such as user commands to process point cloud data. Also, the input-output unit 210 may be a display unit for displaying a graphical user interface which renders the metaverse scene. The bus 212 acts as interconnect between the processor 202, the memory 204, and the input-output unit 210.

Those of ordinary skilled in the art will appreciate that the hardware depicted in FIG. 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a computing system 102 as is unique to the present disclosure or necessary for an understanding of the present disclosure is depicted and described. The remainder of the construction and operation of the computing system 102 may conform to any of the various current implementation and practices known in the art.

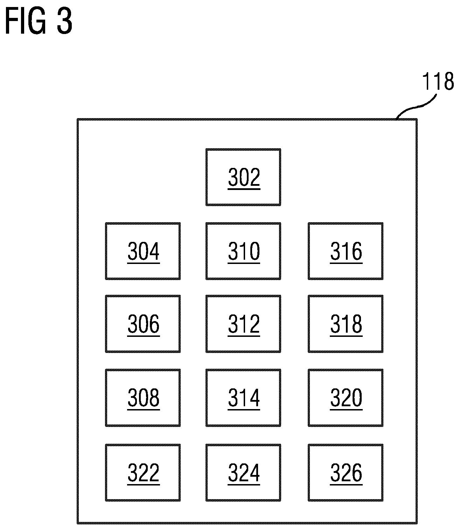

FIG. 3 is a block diagram of the object detection model optimization module 118, such as those shown in FIGs. 1 and 2, for optimizing object detection model for detecting one or more objects in a computer simulated environment 107, according to the embodiment of the present invention. The computer-simulated environment 107 may include at least one of a metaverse environment, a virtual environment, an augment environment, a computing environment, a 3D environment, a point cloud environment, and the like. In FIG. 3, the object detection model optimization module 118 comprises a data acquisition module 302, feature extraction module 304, a base object detection selection module 306, first pattern model generation module 308, a second pattern model generation module 310, a model optimization pattern determination module 312, a first object detection model generation module 314, second object detection model generation module 316, a fitness score evaluation module 318, a optimal object detection model identification 320, rendering module 322, a object detection model quality monitoring module 324, and a optimal model detection discovery module 326.

The data acquisition module 302 is configured for receiving point cloud data pertaining to a real-world scene having one or more objects therein corresponding to one or more assets in a technical installation. The data acquisition module 302 comprises receiving the point cloud data comprises receiving a three-dimensional (3D) multimedia data corresponding to one or more scenes to be rendered in the computer-simulated environment, from one or more data acquisition devices.

The feature extraction module 304 is configured for extracting one or more features from individual points in the point cloud data. The one or more features correspond to one or more properties of the one or more objects. The feature extraction module 304 is configured for removing anomalies from the point cloud data, wherein anomalies are at least one of: outliers, noise, missing data points, duplicate points, or irrelevant artifacts that do not represent the true geometry or structure of the objects within the environment.

The base object detection selection module 306 is configured for selecting the base object detection model based on the extracted features, wherein the selection is based on a probability of accurate object detection when the base object detection model is executed on the point cloud data.

The first pattern model generation module 308 is configured for generating a first set of pattern models from the base object detection model. Each of the pattern models in the first set of pattern models identify symmetries and patterns from the point cloud data. The first set of pattern model generation module 308 is configured for randomizing architecture of the base object detection model, each architecture comprising random network topology of different layers of nodes, connection between each layer of nodes, and corresponding weights of each connection between nodes. The first pattern model generation module 308 is configured for identifying symmetries and patterns from the point cloud data pertaining to at least one of: object placement, object orientation, object scale, object relationships, and spatial distribution using the first set of pattern models.

The second pattern model generation module 310 is configured for iteratively generating the second set of pattern models using neuro-evolution algorithms until a target criteria is met. The the second set of pattern models 310 is configured for iteratively generating the second set of pattern models from the top performing models using crossover, mutation and speciation techniques of neuro-evolution algorithms. The second of pattern models correspond to architectures having a new population of pattern models generated based on patterns learned from the point cloud data using the first set of pattern models. The second pattern model generation module 310 is configured for identifying symmetries and patterns from the point cloud data pertaining to at least one of: object placement, object orientation, object scale, object relationships, and spatial distribution using second set of pattern models.

The model optimization pattern determination module 312 is configured for generating the first set of optimization parameters and the second set of optimization parameters. The model optimization pattern determination module 312 is configured for determining the first set of model optimization parameters are for updating the base object detection model based on the generated first set of patterns. The first set of model optimization parameters comprises at least one of: number of layers of nodes in the first set of pattern models, number of nodes in each layer in the first set of pattern models, connections between nodes of the first set of pattern models, and weights of each connection of the first set of pattern models. Furthermore, the model optimization pattern determination module 312 is configured for determining the second set of model optimization parameters for updating the first set of object detection models based on the generated second set of patterns. The second set of parameters comprises at least one of: number of layers of nodes in the second set of pattern models, number of nodes in each layer in the second set of pattern models, connections between nodes of the second set of pattern models, and weights of each connection of the second set of pattern models.

The first object detection model generation module 314 is configured for generating the first set of object detection models corresponding to the first set of model optimization parameters comprising one or more model optimization parameters determined for each pattern model in the first set of pattern models by updating one or more initial parameters of the base object detection model with one or more model optimization parameters in the first set of model optimization parameters.

The second object detection model generation module 316 comprises configured for generating the second set of object detection models corresponding to the second set of model optimization parameters comprising one or more model optimization parameters determined for each pattern model in the second set of pattern models by updating one or more first set of optimization parameters of the first object detection model with one or more model optimization parameters in the second set of model optimization parameters.

The fitness score evaluation module 318 is configured for evaluating performance of each of first set of pattern models by calculating a fitness score based on an accuracy of object detection task performed by the corresponding object detection model in the first set of object detection models. Furthermore, fitness score evaluation module 318 is configured for evaluating performance of each of second set of pattern models by calculating a fitness score based on an accuracy of object detection task performed by the corresponding object detection model in the second set of object detection models. The evaluation is done for the first object detection models by executing the object detection models on the point cloud data, and then calculating a fitness score for each of the first set of pattern models corresponding to respective first set of object detection models. Furthermore, the evaluation is done for the second set of object detection models by executing the object detection models on the point cloud data, and then calculating a fitness score for each of the second set of pattern models corresponding to respective second set of object detection models

The optimal object detection model identification 320 is configured for selecting the one or more object detection models from the first set of object detection models corresponding to the pattern model from the first set of pattern models having a highest fitness score, if the first set of pattern models comprises at least one pattern model with a fitness score above the predefined threshold fitness score. Furthermore, optimal object detection model identification 320 is configured for selecting the one or more object detection models from the second set of object detection models corresponding to the pattern model from the second set of pattern models having a highest fitness score, if the second set of pattern models comprises at least one pattern model with a fitness score above the predefined threshold fitness score.

The rendering module 322 is configured for validating selected optimized object detection model and then executing the same on the received point cloud data. The object detection task is performed on the point cloud data and is rendered to the user for viewing and/or interacting.

The object detection model quality monitoring module 324 is configured for detecting a substantial change in one or more features of the received point cloud data pertaining to one or more scenes of the computer simulated environment. The substantial change corresponds to a decrease in accuracy of a current object detection model in execution. The object detection model quality monitoring module 324 is configured for generating a third set of pattern models and corresponding third set of optimization parameters to obtain a third set of object detection models, until the target criteria of obtaining a desired fitness score for the pattern models is satisfied.

The optimal model detection discovery module 326 is configured for determining the optimal object detection model for a given point cloud data from the database comprising a plurality of optimized object detection models generated for a plurality of point cloud data against one or more features extracted from respective point clouds. The optimal model detection discovery module 326 is configured for mapping a new point cloud data to one of the optimized object detection models stored in the database based on a similarity of extracted one or more features from the new point cloud data to the one or more features stored in the database.

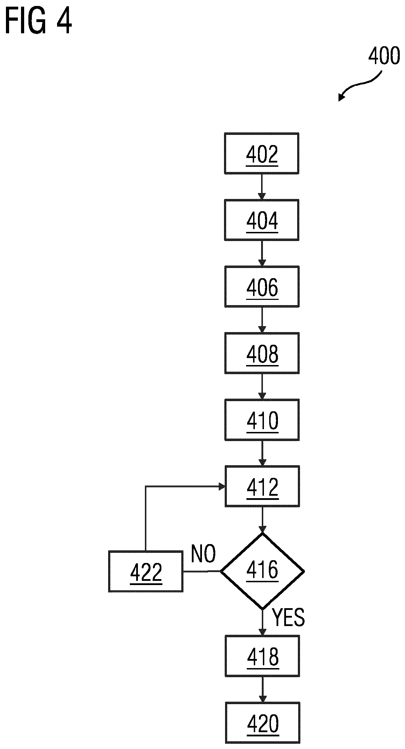

FIG 4 is a flow diagram depicting an exemplary method 400 of optimizing object detection model for detecting one or more objects in a computer simulated environment, according to an embodiment of the present invention. Herein the term "optimizing" refers to the process of iteratively improving the performance of an initial (base) object detection model specifically for the task of accurately detecting one or more objects (corresponding to assets in a technical installation within a computer-simulated environment) from point cloud data. The primary goal of optimization is to enhance the ability of the object detection model to correctly identify and locate the objects of interest in the point cloud data, as indicated by the fitness score being based on detection accuracy. It is to be understood that the process of "optimizing" the object detection models is automated to iteratively generate pattern models and determine optimization parameters for updating the object detection model, reducing the need for manual intervention in designing or tuning the object detection model. The goal is to optimize an object detection model for the object detection task i.e. processes performed by an object detection model to identify and locate specific objects of interest within the received point cloud data representing a metaverse environment (or a real-world scene corresponding to it).

At step 402, point cloud data pertaining to a real-world scene having one or more objects therein corresponding to one or more assets in a technical installation is received. The method comprises receiving point cloud data that represents a three-dimensional (3D) scan of a real-world scene. The scene contains one or more physical assets 106 in the technical installation 122 that to correspond to one or more objects 108 in the computer-simulated environment 107 (e.g., the metaverse). In an embodiment, the method of receiving the point cloud data comprises receiving a three-dimensional (3D) multimedia data corresponding to one or more scenes to be rendered in the computer-simulated environment 107 from one or more data acquisition devices 104. The point cloud data can be acquired using various 3D scanning technologies, such as LiDAR sensors, depth cameras, photogrammetry techniques, or other suitable methods. The format of the received point cloud data can vary (e.g., XYZ coordinates, potentially with additional attributes like color or intensity) depending on the acquisition method. The objects 108 within the real-world scene, now represented as points in the point cloud, correspond to specific assets 106 in this technical installation (e.g., machinery, control panels, pipelines). This step ensures that the object detection model will be optimized for recognizing these specific types of assets 106 in the metaverse.

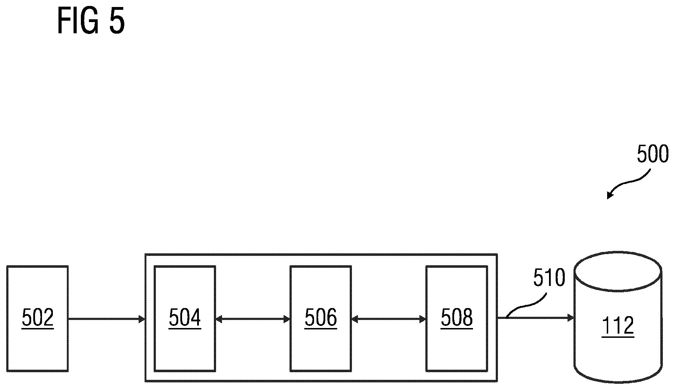

The method of acquiring 3D point cloud data is further explained in detail in FIG. 5.

FIG. 5 is a flow diagram depicting an exemplary method 500 of acquiring three-dimensional (3D) point cloud data, according to an embodiment of the present invention.

At step 502, the method 500 comprises detecting, by the processor 202, one or more scenes by one or more data acquisition devices 104. At step 504, the method 500 comprises capturing, by the processor 202, the one or more scenes via the data acquisition devices 104. The choice of data acquisition devices depends on the specific application and desired level of detail. For example, light detection and ranging (LiDAR), radio detection and ranging (Radar), stereo cameras, sensor placement, and the like.

At step 506, the method 500 comprises synchronizing, by the processor 202, the captured sensor data. Each sensor records data with a timestamp. These timestamps are compared and adjusted to ensure that data from different sensors corresponds to the same moment in time. In some cases, specialized hardware or synchronization protocols are used to guarantee precise timing alignment.

At step 508, the method 500 comprises pre-processing, by the processor 202, the synchronized data. The primary data preprocessing comprises noise removal (outliers) by statistical methods, in which outliers can be identified based on statistical measures like standard deviation or z-scores. A spatial filtering comprises algorithms that can detect points that are significantly different from their neighbours in terms of position or intensity. Further, distance-range based filtering comprises region of interest (ROI), in which a specific area of interest is defined, and only points within that region are retained. Minimum and maximum distances include points outside of a certain distance range might be discarded to focus on relevant objects. Verify that the data is consistent with known properties of the environment (e.g., ground plane, object shapes). Identify and correct errors or inconsistencies in the data. The processor 202 generates a voxel grid, by dividing the point cloud into voxels (3D grid cells), and only one point per voxel is retained, reducing the number of points. The processor 202 down samples a random subset of points is selected to reduce the point cloud size.

At step 510, the method 500 comprises storing, by the processor 202, the pre-processed data in the database 112.

Referring back to FIG. 4, at step 404, one or more features are extracted from individual points in the point cloud data, wherein the one or more features correspond to one or more properties of the one or more objects.

Once the point cloud data is received, the processing unit proceeds to extract one or more features from the individual points within the cloud. These extracted features are designed to capture essential properties of the objects present in the scene, aiding in their subsequent detection and identification.

In an embodiment, the one or more features comprises at least of: Point Coordinates (XYZ), Surface Normals, Curvature, RGB Values, Intensity Values, Connectivity, Neighborhood Relationships, Temporal Consistency, Bounding Boxes or Envelopes, Shape Descriptors, Spatial Relationships.

In an example, the one or more extracted features include but not limited to:
1. Geometric Features: Such as XYZ coordinates, surface normals (indicating surface orientation), curvature (measuring surface deviation from flatness), point density in local neighborhoods, and local shape descriptors (e.g., Spin Images, Point Feature Histograms (PFH), Fast Point Feature Histograms (FPFH), SHOT descriptors). These features help to characterize the shape and structure of the objects.
2. Color/Intensity Features: If the point cloud data includes color information (e.g., RGB values captured by a camera during scanning) or intensity information (e.g., the strength of the reflected laser pulse in LiDAR), these attributes can also be extracted as features. These features can provide additional distinguishing characteristics of the objects based on their visual properties.
3. Higher-Level Features: Depending on the complexity of the base object detection model and the desired level of optimization, the feature extraction step might also involve some initial processing to derive higher-level features that represent more abstract properties of the objects or their parts.

The specific features extracted will be chosen based on their relevance to distinguishing the target assets within the technical installation and their suitability for the chosen base object detection model.

In an embodiment, extracting one or more features from the point cloud data further comprises removing anomalies from the point cloud data. Herein, the anomalies are at least one of: outliers, noise, missing data points, duplicate points, or irrelevant artifacts that do not represent the true geometry or structure of the objects within the environment.

At step 406, a base object detection model is selected based on the extracted features, wherein the selection is based on a probability of accurate object detection when the base object detection model is executed on the point cloud data.

After extracting the relevant features from the point cloud data, the processing unit selects a base object detection model. This base model serves as the starting point for the optimization process. The selection of this base model is a crucial step and is guided by the probability of it accurately detecting the objects (assets) present in the point cloud data. This probability can be estimated based on several factors, including but not limited to prior knowledge, compatibility with extracted features, initial analysis of data, and performance benchmarks. In an example, the base object detection model selection is based on prior knowledge i.e. information about the types of objects expected in the technical installation and the performance of different object detection models on similar types of point cloud data. In another example, the base object detection model selection is based on compatibility with extracted features i.e. the base model should be compatible with the types of features extracted in the previous step. For example, a model designed for voxelized point clouds would not be suitable if only point-based features are extracted. In another example, the base object detection model is selected based on analysis of the data i.e. preliminary analysis of the point cloud data, such as point density and object complexity, might influence the choice of the base model. In another example, the base object detection model is selected based on performance benchmarks i.e. existing performance benchmarks of various object detection models on relevant datasets can be used to estimate the initial probability of accurate detection.

Examples of suitable base object detection models could include but not limited to PointNet, PointNet++, VoxelNet, SECOND, or other established point cloud object detection architectures. Advantageously, selection aims to choose a model that has a reasonable likelihood of achieving acceptable accuracy but can potentially be further optimized for the specific characteristics of the technical installation and its assets.

At step 408, a first set of pattern models is generated from the base object detection model, wherein each of the pattern models in the first set of pattern models identify symmetries and patterns from the point cloud data.

In an embodiment, the first set of pattern models are generated by randomizing architecture of the base object detection model, each architecture comprising random network topology of different layers of nodes, connection between each layer of nodes, and corresponding weights of each connection between nodes.

Notably, the first set of pattern models is generated from the selected base object detection model. In the context of this invention, these pattern models are likely to be related to the underlying mechanisms that govern the architecture and parameters of the base object detection model. These pattern models are designed to identify inherent symmetries and patterns within the point cloud data that are relevant to the detection of the target assets. The first set of pattern models could be initial CPPNs that are designed to generate the architecture or weights of the object detection model based on patterns observed in the point cloud data or the structure of the base model. These initial CPPNs might be randomly initialized or seeded based on the characteristics of the base model.

Advantageously, the goal of generating the pattern models is to capture the underlying regularities, similarities, and structures in the point cloud data that are indicative of the presence and shape of the assets in the technical installation.

At step 410, a first set of model optimization parameters is generated for updating the base object detection model based on the results of the execution of pattern models on the point cloud data, to obtain a first set of object detection models.

In an embodiment, the method of determining the first set of model optimization parameters comprises generating a first set of patterns from the point cloud data by executing the generated first set of pattern models on the point cloud data. The first set of patterns comprises at least one of: spatial arrangements, object symmetries, orientation patterns, object scaling variations, and relational patterns between the objects. The first set pattern models (CPPNs) are designed to identify inherent similarities, structures and regularities within the point cloud that are relevant to the objects of interest (the assets in the technical installation). The execution of these first set of pattern models results in the generation of a first set of patterns. These patterns can manifest in various forms, including but not limited to spatial arrangements, object symmetries, object patterns, orientation patterns, object scaling variations, and relational patterns. In an example, identifying spatial arrangements comprises identifying the typical spatial relationships and configurations of points that constitute individual objects or groups of objects. For example, recognizing that certain points tend to cluster in specific 3D shapes. In another example, identifying object symmetries comprises identifying any symmetrical properties present in the point cloud representations of the objects, such as rotational or reflectional symmetry. In another example, identifying orientation patterns comprises recognizing the common orientations or alignments of the objects within the scene. For instance, identifying that certain assets are typically oriented vertically or horizontally. In an embodiment, the identifying object scaling variations comprises determining the typical range of sizes or scales at which the objects appear in the point cloud data. In another example, identifying relation patterns comprises recognizing the typical spatial relationships between different objects in the scene. For example, identifying that a specific type of machinery is often located adjacent to a particular control panel. It is to be noted that the specific type of patterns identified will depend on the nature of the pattern models in the first set. If these pattern models are, for instance, initial CPPNs, their internal structure and evolved functions will determine the types of patterns they are capable of extracting from the input point cloud data.

Further, the method comprises determining the first set of model optimization parameters for updating the base object detection model based on the generated first set of patterns.

Once the first set of patterns is generated, the method comprises analyzing these patterns to determine the first set of model optimization parameters for updating the base object detection model. These first set of optimization parameters are intended to guide the modification of the base model in a way that allows it to better recognize the identified patterns and, consequently, improve its object detection accuracy for the specific assets in the technical installation. The first set of model optimization parameters comprises at least one of: number of layers of nodes in the first set of pattern models, number of nodes in each layer in the first set of pattern models, connections between nodes of the first set of pattern models, and weights of each connection of the first set of pattern models.

In an example, the first set of model optimization parameters are determined based on the results of applying the generated pattern models to the received point cloud data. This step involves using the insights gained from the pattern models to suggest modifications or updates to the base object detection model. In an example, the first set of model optimization parameters are determined based on identifying areas for improvement in the base object detection model. The pattern models might reveal inefficiencies or limitations in the base model's ability to capture certain patterns or symmetries present in the point cloud data of the technical installation's assets. In another example, the first set of model optimization parameters are determined based on suggesting architectural changes. Based on the identified patterns, the optimization parameters might propose modifications to the base model's architecture, such as adding or removing layers, changing the number of neurons or filters, or altering the connectivity between layers. In another example, the first set of model optimization parameters are determined based on tuning hyperparameters. The optimization parameters might also suggest changes to the hyperparameters of the base model, such as learning rate, batch size, or regularization parameters. In another example, the first set of optimization parameters could represent modifications to the structure or weights of the initial CPPNs, which in turn would generate slightly different object detection models.

By applying these first set of model optimization parameters to the base object detection model, a first set of updated object detection models is obtained. Each model in this set represents a slightly different variation of the base model, potentially better suited for detecting the assets in the technical installation.

In an embodiment, the method further comprises generating the first set of object detection models. The method comprises updating one or more initial parameters of the base object detection model with one or more model optimization parameters in the first set of model optimization parameters, wherein the one or more model optimization parameters correspond to each pattern model in the first set of pattern models. Further, the method comprises generating the first set of object detection models corresponding to the first set of model optimization parameters comprising one or more model optimization parameters determined for each pattern model in the first set of pattern models.

When the first set of optimization parameters are applied to update the base object detection model, they result in a distinct object detection model. Therefore, the process of updating the base model with each of the different sets of optimization parameters leads to the creation of the first set of object detection models. Each model in this first set represents a variation of the original base model, where the variations are guided by the patterns identified in the point cloud data through the lens of the corresponding pattern models. This creates a diverse set of candidate object detection models that can then be evaluated for their performance on the object detection task.

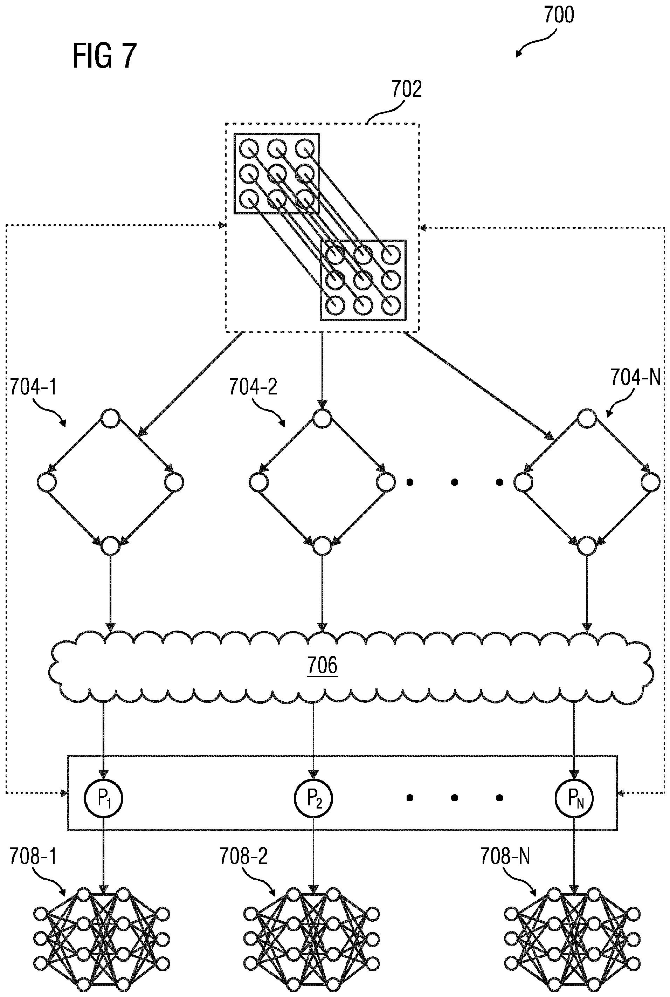

FIG 7 is a flow diagram depicting an exemplary method 700 for generating the first set of object detection models, according to an embodiment of the present invention. As shown, 702 represents the substrate or the base object detection model that is selected as the base model for optimization. The first set of pattern models 704-1, 704-2, 704-3 ............... 704-N (hereinafter, collectively referred to as 704) are generated from the base object detection model 702 by randomising the architecture of the object detection model 702. The first set of patterns identify symmetries and patterns when executed on the point cloud data 706. Based on the identified patterns, the first set of optimization parameters P₁, P₂, P₃.......P_{N} are determined. In an example, the optimization parameters P₁ are determined by analysing the patterns generated from the pattern model 704-1 when executed on the point cloud data. Furthermore, the optimization parameters P₂ are determined by analysing the patterns generated from the pattern model 704-2 when executed on the point cloud data. Similarly, the optimization parameters P_{N} are determined by analysing the patterns generated from the pattern model 704-N when executed on the point cloud data. Once the optimization parameters P₁ to P_{N} are generated, each of the parameters P₁ to P_{N} are used to update the base object detection model 702. The base object detection model 702 is updated with the first set of optimization parameters P₁, P₂, .... P_{N} to generate the first set of object detection models 708-1, 708-2, 708-3 ............... 708-N (hereinafter, collectively referred to as 708). In other words, the object detection models 708-1 is generated when the base object detection model 702 is updated with optimization parameters P₁, the object detection models 708-2 is generated when the base object detection model 702 is updated with optimization parameters P₂, and similarly the object detection models 708-N is generated when the base object detection model 702 is updated with optimization parameters P_{N}.

At step 412, a performance of each of first set of pattern models by calculating a fitness score based on an accuracy of object detection task performed by the corresponding object detection model in the first set of object detection models. In an embodiment, the method of evaluating the performance of each of first set of pattern models comprises executing each of the first set of object detection models on the point cloud data. Further, the method of evaluation comprises calculating a fitness score for each of the first set of pattern models corresponding to respective first set of object models, wherein the fitness score is calculated based on an accuracy of object detection task of the respective first set of object detection models.

Notably, the performance of each pattern model in the first set of pattern models is evaluated. This evaluation is done indirectly by assessing the performance of the corresponding object detection model that was generated or updated based on that pattern model's insights. For each object detection model in the first set of object detection models, the method comprises performing an object detection task on a portion of the received point cloud data (or a separate validation dataset representing the technical installation). In an example, the accuracy of this object detection task is then measured using appropriate metrics, such as precision, recall, F1-score, or mean Average Precision (mAP). This accuracy score is then used to calculate a fitness score for the pattern model that led to the creation of that specific object detection model. A higher fitness score indicates that the pattern model was more effective in guiding the optimization of the base object detection model towards better performance on the point cloud data.

The fitness score is calculated based on the accuracy of the object detection task performed by the respective object detection model. The accuracy can be quantified using various standard object detection metrics. In an example, the accuracy is based on precision of the object detection task i.e. the proportion of correctly identified objects out of all the objects detected by the model under evaluation. In another example, the accuracy is based on recall of the object detection task i.e. the proportion of correctly identified objects out of all the actual objects present in the point cloud data (ground truth). In another example, accuracy is based on mean average precision i.e. comprehensive metric that considers the precision and recall at different confidence levels and averages it across all object classes.

The specific formula used to calculate the fitness score can be a direct measure of one of these accuracy metrics (e.g., the mAP score becomes the fitness score). Alternatively, it could be a combination of multiple metrics, potentially weighted based on the specific requirements of the metaverse application. For instance, if high recall is more critical than high precision, the fitness score might give more weight to the recall value. The higher the accuracy achieved by the object detection model (as reflected in the chosen metric or combination of metrics), the higher the fitness score assigned to the corresponding pattern model that guided the creation of that object detection model. Advantageously, the fitness score serves as a measure of how effective each pattern model is in leading to improved object detection performance.

At step 414, a decision is made whether the fitness score obtained for at least one of the pattern models in the first set of pattern models is above a predefined threshold fitness score. In a case when the fitness score is above the predefined threshold score, then execute step 416. In a case when the fitness core is below the predefined threshold for all the pattern models in the first set of pattern models, then execute step 420.

At step 416, one or more optimized object detection models are identified from the first set of object detection models based on a pre-defined level of accuracy for object detection tasks to be performed on the point cloud data, when the when the fitness score is above the predefined threshold score.

In an embodiment, the method of identifying one or more optimized object detection models from the first set of object detection models comprises selecting, the one or more object detection models from the first set of object detection models corresponding to the pattern model from the first set of pattern models having a highest fitness score, if the first set of pattern models comprises at least one pattern model with a fitness score above the predefined threshold fitness score.

Notably, the identification of one or more optimized object detection models from the first set of object detection models is performed based on the fitness scores calculated for their corresponding pattern models in the first set. Specifically, if, after the evaluation of the first set of pattern models, it is determined that at least one pattern model has achieved a fitness score that is above the predefined threshold fitness score, then the selection process focuses on the pattern model within the first set that has yielded the highest fitness score.

Once the pattern model with the highest fitness score in the first set is identified, the one or more object detection models that were generated or updated based on the optimization parameters derived from this highest-performing pattern model are selected as the optimized object detection models.

Advantageously, this selection strategy prioritizes the object detection model(s) that have demonstrated the best performance (highest accuracy, potentially balanced with efficiency, as defined by the fitness score) in the initial optimization cycle, provided that their performance has already surpassed the minimum acceptable threshold. This allows for the possibility of identifying a satisfactory solution early in the optimization process without necessarily waiting for the iterative generation of the second set of pattern models. This can save computational resources and time if a sufficiently accurate model is found in the initial stages.

At step 418, the object detection tasks are performed on the received point cloud data, using the one or more optimized object detection models.

Finally, the method comprises utilizing the identified one or more optimized object detection models to perform object detection tasks on the received point cloud data. These optimized models, having been specifically tailored for the characteristics of the technical installation's assets, provide a higher level of accuracy and efficiency compared to the initial base object detection model. Advantageously, output of these object detection tasks will include information about the presence, location (e.g., 3D bounding boxes), and potentially the class of the detected assets within the point cloud representation of the real-world scene, thereby enabling accurate and automated scene understanding within the corresponding metaverse environment.

In an embodiment, the method of performing, object detection tasks on the received point cloud data, using the optimized object detection model further comprises validating an accuracy of the optimized object detection model by executing the optimized object detection model on the received point cloud data.

The validation of the optimized object detection models is performed by executing the selected optimized object detection model (or models) on the received point cloud data, which represents the real-world scene of the technical installation within the metaverse environment.

The purpose of this validation is to ensure that the optimized model, which was selected based on its performance during the iterative optimization process, maintains a consistent and acceptable level of accuracy when applied to the actual point cloud data intended for object detection within the metaverse. This step serves as a final check on the performance of the model in the intended operational scenario.

The validation process can be done using various methods, such as execution on the entire point cloud data, comparison with the ground truth, qualitative assessment, and so forth.

Advantageously, the results of the validation step provide a measure of confidence in the accuracy of the optimized object detection model when it is deployed for use within the computer-simulated environment. If the validation results indicate that the accuracy is below an acceptable level for the final application, further optimization iterations might be considered, or alternative optimized models identified during the process might be evaluated. This ensures the reliability and effectiveness of the object detection within the metaverse.

At step 420, iteratively generating a second set of pattern models and corresponding second set of optimization parameters to obtain a second set of object detection models, until a target criteria is satisfied. The target criteria is identifying a pattern model and corresponding optimization parameters that when executed on the point cloud data using the updated object detection model, outputs a fitness score above a predefined threshold fitness score. Each of the pattern models in the second set of pattern models identify symmetries and patterns from the point cloud data.

Until the target criteria of finding a pattern model having a fitness score above the predefined threshold is met, the method then enters an iterative optimization loop. In each iteration, a second set of pattern models is generated, and a corresponding second set of optimization parameters is determined. This iterative generation is guided by the fitness scores obtained in the previous evaluation step. This process involves applying evolutionary computation techniques to a population of pattern models.

For each pattern model in the second set, a corresponding set of optimization parameters is determined, and these parameters are used to further update the object detection model (potentially the base model or the best-performing model from the previous iteration). This results in a second set of object detection models. The performance of these models is again evaluated, and fitness scores are calculated for the corresponding pattern models. This iterative process continues until a predefined target criterion is satisfied. The target criterion is typically reaching a fitness score that is above a predefined threshold. This threshold represents an acceptable level of accuracy for the object detection task on the point cloud data of the technical installation's assets.

In an embodiment, the method of determining the second set of model optimization parameters comprises generating a second set of patterns from the point cloud data by executing the generated second set of pattern models on the point cloud data. The second set of patterns comprises at least one of: spatial arrangements, object symmetries, orientation patterns, object scaling variations, and relational patterns between the objects.

In an example, the method comprises executing each of the pattern models in the second set on the received point cloud data. These second-generation pattern models, having potentially evolved from the first set through evolutionary operations are also designed to identify symmetries and patterns within the point cloud data relevant to the target assets. The execution of these models yields a second set of patterns, which, similar to the first set, can include but not limited to, spatial arrangements of points, object symmetries, orientation patterns, object scaling variations, and relational patterns between objects.

However, the second set of patterns are more refined or focused compared to the first set, as the pattern models have undergone a round of evolution based on their initial performance. Advantageously, the second set of pattern models are better at capturing more subtle or complex patterns in the point cloud data that are indicative of accurate object detection.

In an embodiment, the second set of pattern models are generated by selecting top performing pattern models from the first set of pattern models, wherein the first set of pattern models when evaluated on the base object detection model have the fitness score below the predefined threshold fitness score. Further, the method comprises generating the second set of pattern models from the top performing models using crossover, mutation and speciation techniques of neuro-evolution algorithms. The second of pattern models correspond to architectures having a new population of pattern models generated based on patterns learned from the point cloud data using the first set of pattern models.

In an embodiment, the top performing pattern models are selected by ranking the first set of pattern models based on the calculated fitness score in a descending order and discarding last two pattern models from the first set of pattern models having lowest ranking in the order.

In an embodiment, the method of generating the second set of pattern models using neuro-evolution algorithm comprises identifying network topology with parameters such as nodes and weights, of each the top performing pattern models; and introducing random changes to each of the top performing pattern models using mutation operation in order to generate the second set of pattern models, each having novel a novel architecture, wherein random changes comprise at least one of: addition of a node, deletion of a node, addition of a connection, deletion of a connection, addition of a layer, and deletion of a layer.

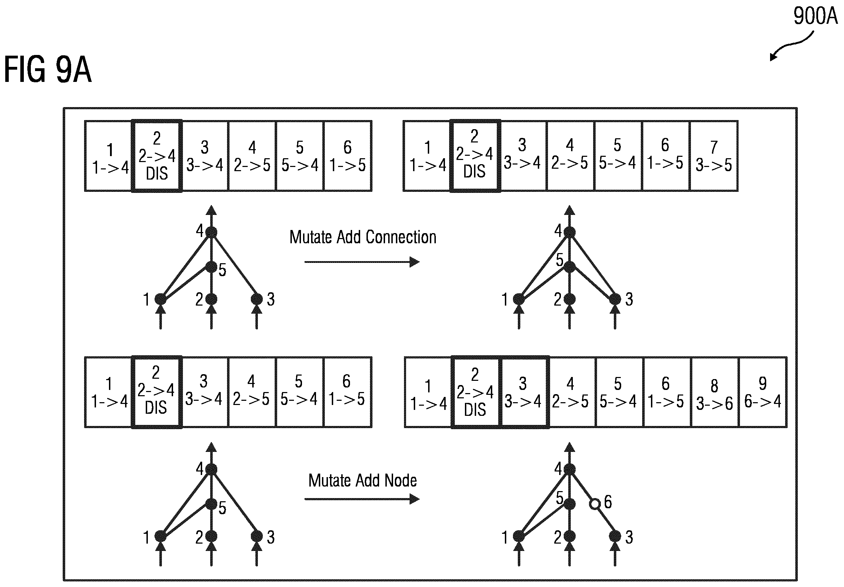

Referring to FIG. 9A, depicted is a flow diagram of an exemplary method 900A mutation operation performed for generating second set of pattern models, according to the embodiment of the present invention. In the context of neuro-evolution algorithms, the mutation operation is a genetic operator that introduces small, random changes to the genome of an offspring network (which might have been created through crossover or directly selected for reproduction). The primary purpose of mutation is to introduce diversity into the population and to explore new regions of the search space that might not be reachable through crossover alone. It helps prevent premature convergence to suboptimal solutions and allows the evolutionary process to discover novel and potentially advantageous network structures or parameter values. Advantageously, the mutation operation in neuro-evolution introduces novelty and diversity into the population of neural networks. By making random alterations to the genomes of offspring, mutation allows the evolutionary process to explore a broader range of potential solutions and potentially escape local optima, ultimately contributing to the discovery of more effective neural network architectures and weights for the given task.

In an embodiment, the method of generating the second set of pattern models using neuro-evolution algorithm comprises identifying network topology with parameters such as nodes and weights, of each the top performing models; and mixing different pairs of the top performing models based on the identified network topology using crossover operation in order to generate the second set of pattern models, each having a novel architecture of the network topology.

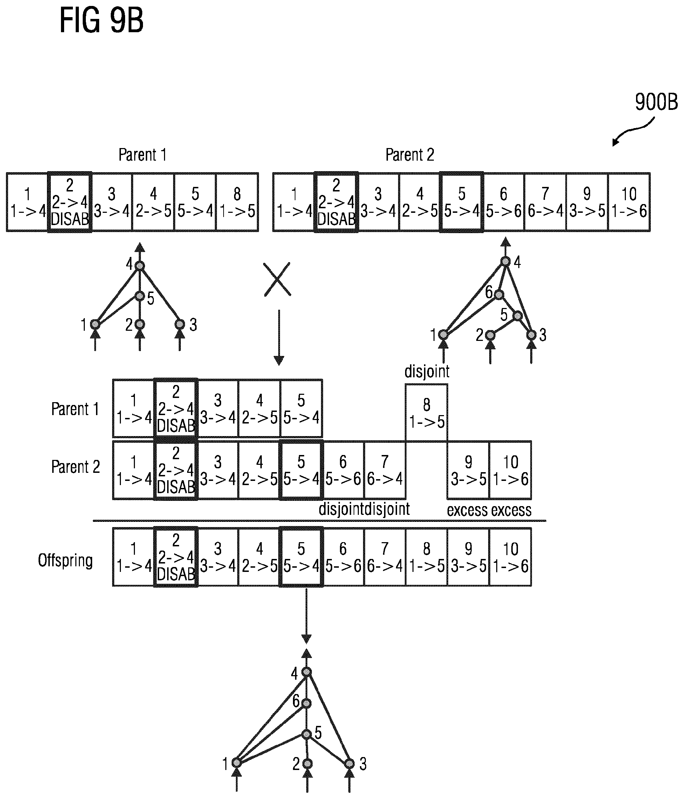

Referring to FIG. 9B depicted is a flow diagram of an exemplary method 900B of crossover operation performed for generating second set of pattern models, according to an embodiment of the present invention. In the context of neuro-evolution algorithms, the crossover operation (also known as recombination) is a genetic operator that takes two or more parent neural networks from the current population and combines their genetic information to produce one or more offspring networks for the next generation. The goal of crossover is to create new individuals that inherit potentially beneficial traits from both parents, thereby accelerating the evolutionary search process towards better solutions. Notably, the crossover operation in neuro-evolution aims to explore new regions of the search space by creating novel combinations of potentially successful network architectures or parameters that have been found in previous generations. Advantageously, the cross over operation introduces diversity and driving the evolutionary process towards better performing neural networks. The effectiveness of a particular crossover operator can depend on the specific problem and the chosen genetic representation.

In an embodiment, the method of generating the second set of pattern models using neuro-evolution algorithms comprises classifying the top performing pattern models into different groups based on a specie of the pattern models. The top performing pattern models having a topological similarity are clustered together. The method comprises evolving the pattern models from each of the cluster using speciation operation in order to generate the second set of pattern models, each having novel a novel architecture.

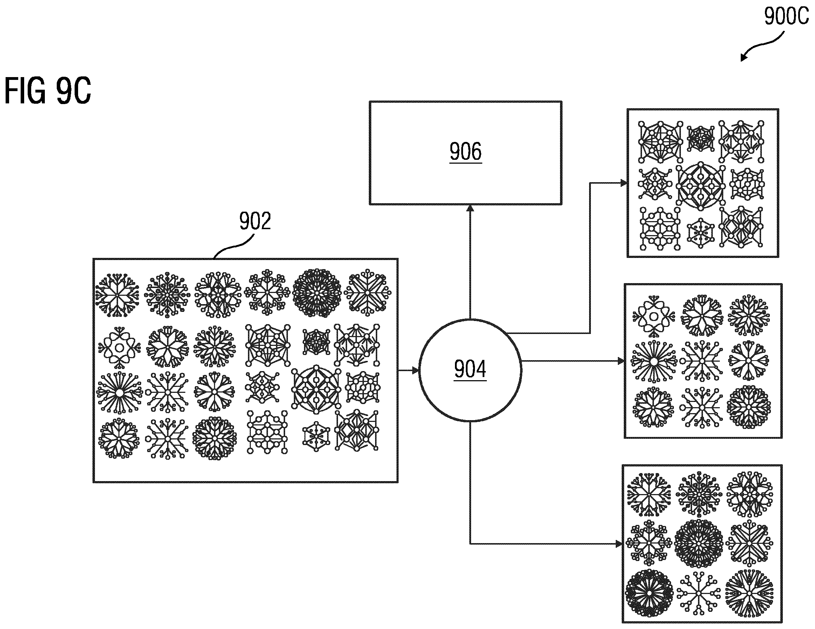

Referring to FIG 9C depicted is a flow diagram of an exemplary method 900C speciation operation performed for generating second set of pattern models, according to an embodiment of the present invention. In neuro-evolution algorithms, speciation is a mechanism used to divide the population of evolving neural networks into distinct groups called species based on their genetic similarity. The primary goal of speciation is to promote diversity within the population and to protect innovative or promising but not yet fully optimized individuals from being eliminated by more mature but potentially less adaptable individuals. Advantageously, speciation helps in grouping point cloud object detection models with similar architectures or optimization techniques together. This would allow different approaches to evolve independently. For example, one species might focus on a particular type of feature extraction, while another might explore a different network topology. This parallel exploration can increase the chances of finding highly effective and diverse solutions for your object detection task. As shown, different species of neural networks are grouped based on their topological similarity via a grouping module 904, and then a similarity score is calculated via similarity module 906 to generate different variations/species of neural networks.

In an embodiment, the method of evaluating the performance of each of second set of pattern models comprises executing each of the second set of object detection models on the point cloud data. Further, the method comprises calculating a fitness score for each of the second set of pattern models corresponding to respective second set of object models. The fitness score is calculated based on an accuracy of object detection task of the respective second set of object detection models.

In an example, each of the object detection models in the second set is executed on the received point cloud data. As these models have been further refined based on the second set of optimization parameters, their object detection predictions show improved accuracy compared to the models in the first set. Each object detection model in the second set processes the features extracted from the point cloud data to predict the presence, location, and class of the assets within the metaverse scene.

For each pattern model in the second set of pattern models, a fitness score is calculated. This score directly reflects the performance of the corresponding object detection model from the second set. Similar to the first evaluation round, the fitness score is calculated based on the accuracy of the object detection task performed by the respective object detection model. The same object detection metrics (e.g., precision, recall, F1-score, mAP) used for evaluating the first set of models can be employed here. The fitness score quantifies how well the second-generation pattern model has guided the further optimization of the object detection model. A higher fitness score for a pattern model in the second set indicates that it was more successful in leading to a more accurate object detection model compared to other pattern models in the same set. Advantageously, the iterative evaluation allows the neuro-evolutionary process to identify increasingly effective pattern models and, consequently, increasingly accurate object detection models for the object detection task.

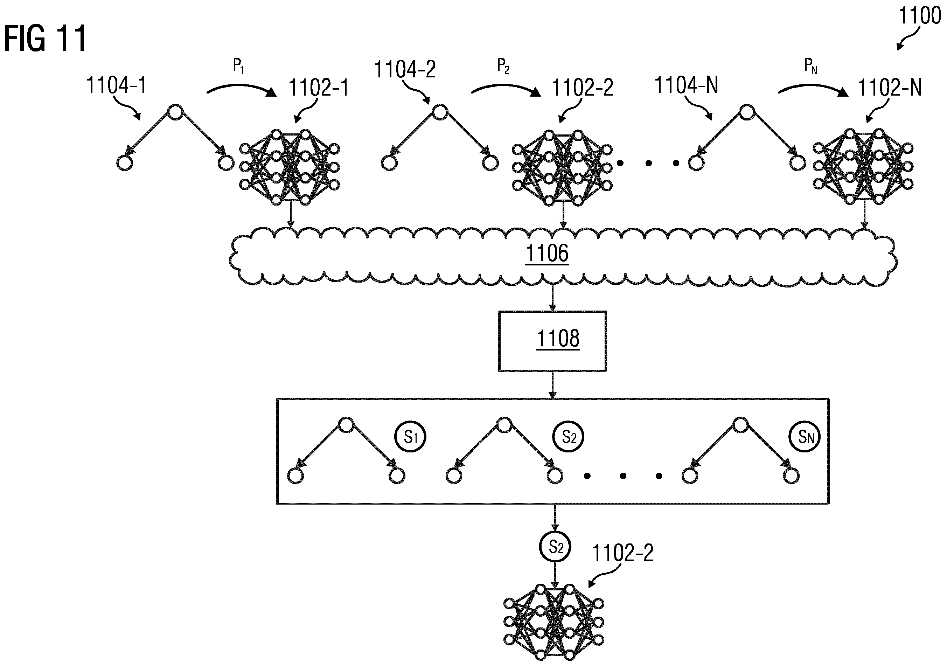

An exemplary evaluation method is illustrated in FIG. 11. FIG 11 is a flow diagram depicting a process flow 1100 of evaluation of generated object detection models and selection of optimal object detection models, according to an embodiment of the present invention. The object detection models 1102-1, 1102-2, 1102-N (collectively referred to as 1102) are generated form the corresponding pattern model 1104-1, 1104-2, 1104-N (collectively referred to as pattern models 1104) by updating the optimization parameters P1, P2, ...........PN. Each of the object detection models 1102-1, 1102-2, 1102-N are executed on the point cloud data 1106. The results of the execution are then evaluated using the evaluation module 1108. The evaluation module 1108 generates fitness scores S1, S2, ..........SN corresponding to the pattern models 1104-1, 1104-2, 1104-N. In an example, the highest fitness score is S2, therefore the corresponding pattern model 1102-2 is selected as the optimized object detection model.

Further, the method comprises determining the second set of model optimization parameters for updating the first set of object detection models based on the generated second set of patterns, The second set of model optimization parameters comprises at least one of: number of layers of nodes in the second set of pattern models, number of nodes in each layer in the second set of pattern models, connections between nodes of the second set of pattern models, and weights of each connection of the second set of pattern models.

It is to be understood that, following the generation of the second set of patterns, the method comprises analyzing the patterns to determine the second set of model optimization parameters. The second set of model optimization parameters are intended to further refine the existing object detection models (specifically, the first set of object detection models that were generated in the initial optimization step, or potentially the best-performing models from that set). By applying these second set of optimization parameters, the method continues to evolve the pattern recognition capabilities, aiming for a better alignment between the model's understanding of the point cloud data and the actual presence and characteristics of the assets in the technical installation. This iterative refinement is crucial for achieving the target level of accuracy in the object detection task.

In an embodiment, the method of generating the second set of object detection models comprises updating one or more parameters of each of the first set of object detection models with one or more model optimization parameters in the second set of model optimization parameters. The one or more model optimization parameters correspond to each pattern model in the second set of pattern models. Further, the method comprises Generating the second set of object detection models corresponding to the second set of model optimization parameters comprising one or more model optimization parameters determined for each pattern model in the second set of pattern models.

In an example, the method comprises taking each of the object detection models that were generated in the first optimization cycle. For each pattern model in the second set of pattern models, there is a corresponding second set of one or more model optimization parameters. The method comprises updating one or more existing parameters of each of the first set of object detection models using the corresponding model optimization parameters from the second set.

By applying the second set of model optimization parameters to each of the object detection models from the first set, a new set of object detection models, the second set, is generated. Each model in this second set represents a further evolution of a model from the first set, incorporating the refinements suggested by the second set of pattern models. Advantageously, this iterative process allows the system to progressively improve the object detection capabilities of the models, moving closer to the target criteria for accuracy in detecting the assets within the metaverse environment.

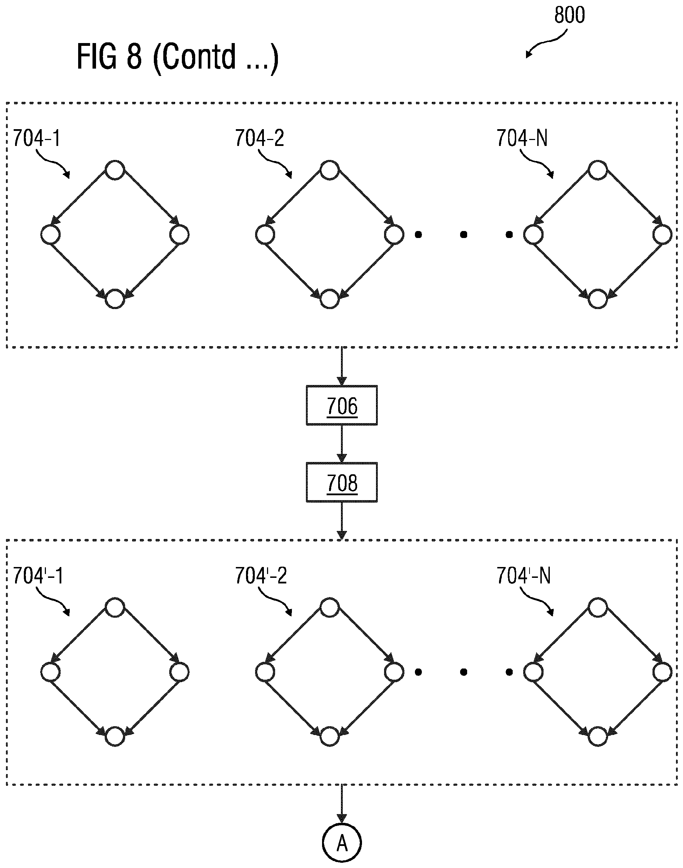

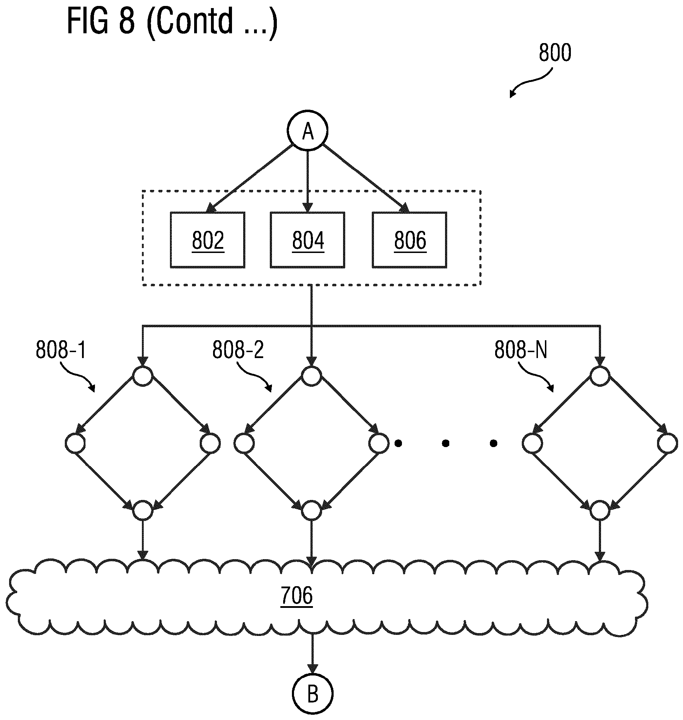

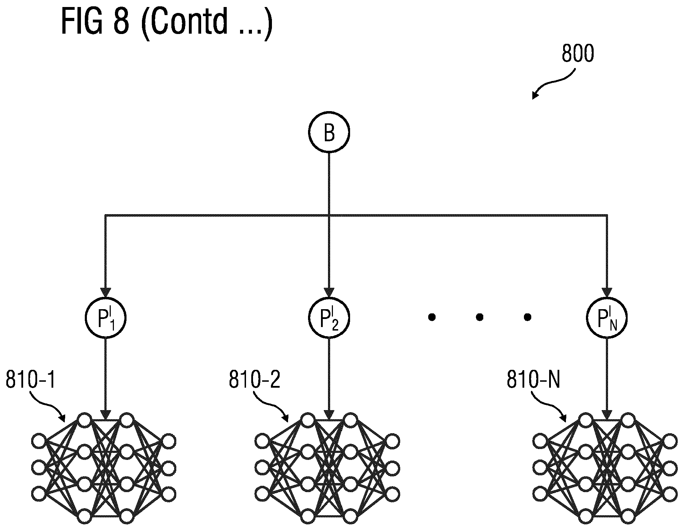

FIG 8 is a flow diagram depicting an exemplary method 800 for generating the second set of object detection models, according to an embodiment of the present invention. The method 800 depicts that the iteration starts with the first set of pattern models 704-1, 704-2, 704-N. The performances of each of models in the second set of pattern models is evaluated using the evaluation model 706. The evaluation module 801 generates the fitness score for each of the pattern models 704 when executed on the point cloud data 706. Further, the ranking module 803 is configured for selecting the top performing models based on the evaluation. The top performing models are depicted as 704'-1, 704'-2..........704'-N. The top performing models 704' are then subjected neuro-evolution operations such as crossover operation 806, mutation operation 808, and speciation operation 810 for diversifying the population of the first set of pattern models 404. Therefore, the second set of pattern models 812-1, 812-2, ..........812-N (collectively referred to as 812) are generated.

The second set of pattern model 812 identify symmetries and patterns when executed on the point cloud data 706. Based on the identified patterns, the second set of optimization parameters P₁', P₂', P₃'.......P_{N}' are determined. In an example, the optimization parameters P₁' are determined by analysing the patterns generated from the pattern model 812-1 when executed on the point cloud data. Furthermore, the optimization parameters P₂' are determined by analysing the patterns generated from the pattern model 812-2 when executed on the point cloud data. Similarly, the optimization parameters P_{N}' are determined by analysing the patterns generated from the pattern model 812-N when executed on the point cloud data. Once the optimization parameters P₁' to P_{N}' are generated, each of the parameters P₁' to P_{N}' are used to update the first set of object detection models 708-1, 708-2, 708-N. The first set of object detection models 708 are updated with the second set of optimization parameters P₁', P₂', .... P_{N}' to generate the second set of object detection models 814-1, 814-2, 814-3 ............... 814-N (hereinafter, collectively referred to as 814). In other words, the object detection models 814-1 is generated when the first object detection model 708-1 is updated with optimization parameters P₁', the second object detection model 814-2 is generated when the first object detection model 708-2 is updated with optimization parameters P₂', and similarly the second object detection model 814-N is generated when the first object detection model 708-N is updated with optimization parameters P_{N}'.

In an embodiment, the method of identifying one or more optimized object detection models from the second set of object detection models comprises selecting, the one or more object detection models from the second set of object detection models corresponding to the pattern model from the second set of pattern models having a highest fitness score, if the second set of pattern models comprises at least one pattern model with a fitness score above the predefined threshold fitness score.

The identification of one or more optimized object detection models from the second set of object detection models is performed based on the fitness scores calculated for their corresponding pattern models in the second set. Following the evaluation of the second set of pattern models it is determined if at least one pattern model within this second set has achieved a fitness score that meets or exceeds the predefined threshold fitness score.

If such a pattern model exists in the second set, the selection process focuses on the pattern model within the second set that has yielded the highest fitness score in this second iteration of the optimization process. The one or more object detection models that were generated or further updated based on the optimization parameters derived from this highest-performing pattern model in the second set are then identified as the optimized object detection models.

This step signifies that the iterative optimization process has progressed to at least a second cycle, and if a satisfactory performance level (above the threshold fitness score) is achieved in this cycle, the resulting object detection model(s) are considered optimized and suitable for performing object detection tasks on the point cloud data within the metaverse environment. This allows the method to potentially find even better-performing models through further iterations of pattern generation and model refinement.

Once the iterative optimization process satisfies the target criteria (or reaches a maximum number of iterations), the method proceeds to identify one or more optimized object detection models. These models are selected from either the second set of object detection models (generated during the iterative process) or potentially even the first set of object detection models if they already meet the required accuracy. The selection is based on achieving a pre-defined level of accuracy for the object detection tasks to be performed on the point cloud data representing the technical installation. The specific accuracy level will depend on the requirements of the metaverse application. Multiple optimized models might be identified to provide a choice based on different trade-offs between accuracy and efficiency.

In an embodiment, the optimized object detection models are utilized to perform object detection tasks on the received point cloud data. These optimized models, having been specifically tailored for the characteristics of the technical installation's assets, provide a higher level of accuracy and efficiency compared to the initial base object detection model. Advantageously, output of these object detection tasks will include information about the presence, location (e.g., 3D bounding boxes), and potentially the class of the detected assets within the point cloud representation of the real-world scene, thereby enabling accurate and automated scene understanding within the corresponding metaverse environment. In an embodiment, the method of performing, object detection tasks on the received point cloud data, using the optimized object detection model further comprises validating an accuracy of the optimized object detection model by executing the optimized object detection model on the received point cloud data. The validation of the optimized object detection models is performed by executing the selected optimized object detection model (or models) on the received point cloud data, which represents the real-world scene of the technical installation within the metaverse environment.

In an embodiment, the method further comprises detecting a substantial change in one or more features of the received point cloud data pertaining to one or more scenes of the computer simulated environment. The substantial change corresponds to a decrease in accuracy of a current object detection model in execution. Furthermore, the method comprises iteratively generating third set of pattern models and corresponding third set of optimization parameters to obtain a third set of object detection models, until a target criteria is satisfied. The target criteria is identifying a pattern model and corresponding optimization parameters that when executed on the point cloud data using the updated object detection model, outputs a fitness score above a predefined threshold fitness score. The substantial change in the one or more features of the point cloud data is detected.

Advantageously, the method incorporates a mechanism for dynamically adapting the object detection model in response to changes in the environment or the assets being monitored within the computer-simulated environment. This adaptive optimization process is triggered by the detection of a substantial change in one or more features of the received point cloud data pertaining to one or more scenes of the metaverse environment. This substantial change is indicative of a potential decrease in the accuracy of the currently deployed object detection model. It is to be noted that "substantial change" could be defined based on various criteria including but not limited to a significant increase or decrease in the number of points representing an object or a scene, detection of deformations, additions, or removals of parts of the assets, changes in the visual characteristics of the objects as captured by the sensors, Significant movement or rearrangement of the assets within the scene, or a direct decrease in the accuracy of the current object detection model, as measured by a drop in confidence scores or a decrease in the number of correctly detected objects over a period of time. Notably, the threshold for what constitutes a "substantial change" would be pre-defined based on the specific application and the expected dynamism of the technical installation within the metaverse.

Upon detecting a substantial change in the point cloud data features that correlates with a decrease in the current object detection model's accuracy, the method comprises initiating a re-optimization process. This involves iteratively generating a third set of pattern models and corresponding third set of optimization parameters to obtain a third set of object detection models. This process mirrors the iterative optimization described earlier for second object detection models but is triggered by the detected change rather than a fixed number of iterations.

Notably, the generation of the third set of pattern models leverages the knowledge gained from previous optimization cycles or start with a new set of initial pattern models. Similarly, the third set of optimization parameters will be determined based on the patterns identified by the third set of pattern models in the changed point cloud data. These parameters will then be used to update the currently deployed object detection models.

This re-optimization process continues until a target criterion is satisfied. Similar to the initial optimization, this criterion is identifying a pattern model and corresponding optimization parameters that, when executed on the changed point cloud data using the updated object detection model, outputs a fitness score above the predefined threshold fitness score. This ensures that the object detection model adapts to the new characteristics of the scene and regains the desired level of accuracy despite the changes. Advantageously, the dynamic re-optimization capability allows the object detection system to remain robust and accurate even in the face of changes within the monitored environment in the metaverse, ensuring the continued reliability of the object detection tasks.

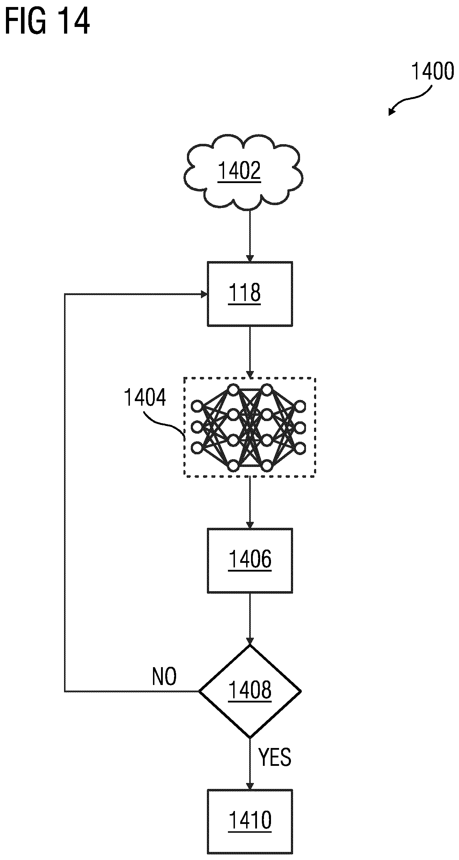

Such an example is illustrated in FIG. 14. FIG. 14 depicts a process flowchart illustrating an exemplary method 1400 of initiating the generation of third set of object detection models when a decrease in accuracy of object detection is detected in a computer-simulated environment, according to an embodiment of the present invention. As shown, the point cloud data 1402 is received in the objection detection optimization module 118. The objection detection optimization module 118 outputs an optimized object detection model 1404 for performing optimal and accurate object detection task on the point cloud data. The accuracy of this task is continuously monitored by an accuracy monitoring module 1406. The results of the accuracy monitoring module are fed to a decision-making module 1408 to decide if the accuracy is above a predefined threshold. If the accuracy is above the predefined threshold, then the object detection task is continued, and objects are rendered via the rendering module 1410. However, if the accuracy is above the predefined threshold, then the objection detection optimization module 118 is triggered to re-optimize the detection model by generating the third set of pattern models, corresponding third set of optimization parameters, and corresponding third set of object detection models.

In an embodiment, the method comprises storing a plurality of optimized object detection models generated for a plurality of point cloud data against one or more features extracted from respective point clouds in a database 112.

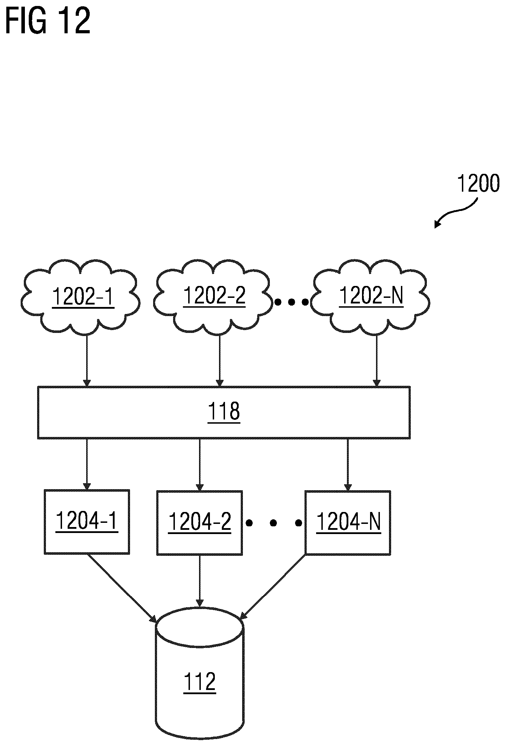

An exemplary embodiment is depicted in FIG 12.

FIG 12 is a flow diagram depicting a process flow 1200 of selecting optimal objection detection model for a particular point cloud data, according to an embodiment of the present disclosure. A plurality of point cloud data 1202-1, 1202-2, 1202-3, ................1202-N (collectively referred to as 1202) are received in the object detection model optimization module 118 to generate plurality of optimized object detection models 1204-1, 1204-2, 1204-N (collectively referred to as 1204) respectively. All the optimized models are then stored in the database 112.

Further, the method comprises mapping, a new point cloud data to one of the optimized object detection models stored in the database based on a similarity of extracted one or more features from the new point cloud data to the one or more features stored in the database 112.

Advantageously, the method incorporates a mechanism for efficiently managing and reusing the optimized object detection models generated over time for various point cloud data inputs. This is achieved through a process of storing and mapping. As the optimization process is performed on different sets of point cloud data (potentially representing different scenes, different states of the technical installation, or data acquired at different times), a plurality of optimized object detection models are generated. These optimized models, along with the one or more features that were extracted from the respective point cloud data they were optimized for, are stored in the database 112. The stored information could include the model architecture, its trained weights (if applicable), the specific features that characterize the point cloud data it was optimized for, and potentially metadata like the time of data acquisition or the specific scene it represents.

In an example, when new point cloud data is received for object detection within the metaverse environment, instead of always initiating the full optimization process, the method first attempts to map this new data to one of the previously generated and stored optimized object detection models. This mapping is based on the similarity of one or more features extracted from the new point cloud data to the one or more features that are stored in the database along with the optimized models. The similarity comparison can be performed using various known techniques, such as calculating feature vectors, using distance metrics, applying clustering or classification techniques, and the like.

Advantageously, if the extracted features from the new point cloud data are found to be sufficiently similar (based on a predefined similarity threshold) to the features associated with a previously optimized object detection model stored in the database, then that stored model can be directly retrieved and used for performing object detection tasks on the new point cloud data. This avoids the computational cost and time associated with re-running the entire optimization process from scratch.

This feature of storage and mapping mechanism allows the system to learn and reuse effective object detection models for recurring or similar scenarios within the metaverse environment, significantly improving efficiency and reducing the computational resources required for object detection over time. If a sufficiently similar model is not found, the system can then resort to initiating the optimization process as described above in FIG. 4.

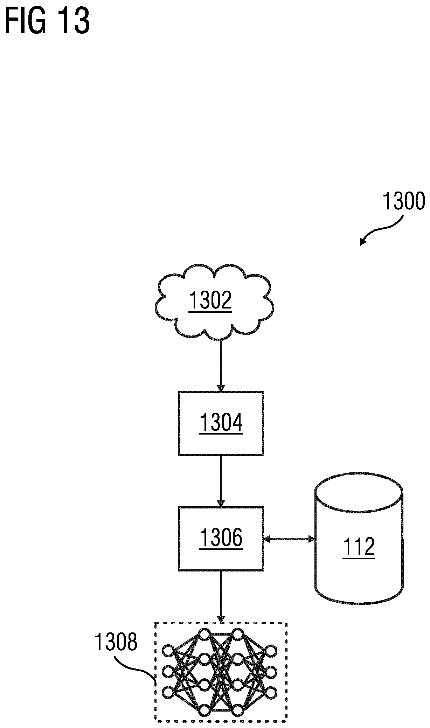

Referring to FIG 13, illustrated is a flow diagram depicting a process flow of storing optimal object detection models in a database, according to an embodiment of the present invention. When a new point cloud data 1302 is received, the one or more features from the point cloud are extracted using the feature extraction module1304. The one or more features are fed to the similarity module 1306 for finding a similarity of the new point cloud data with the plurality of models stored in the database 112. Based on the similarity mapping, the optimal object detection model 1308 is selected for performing the object detection task on the point cloud data 1302.

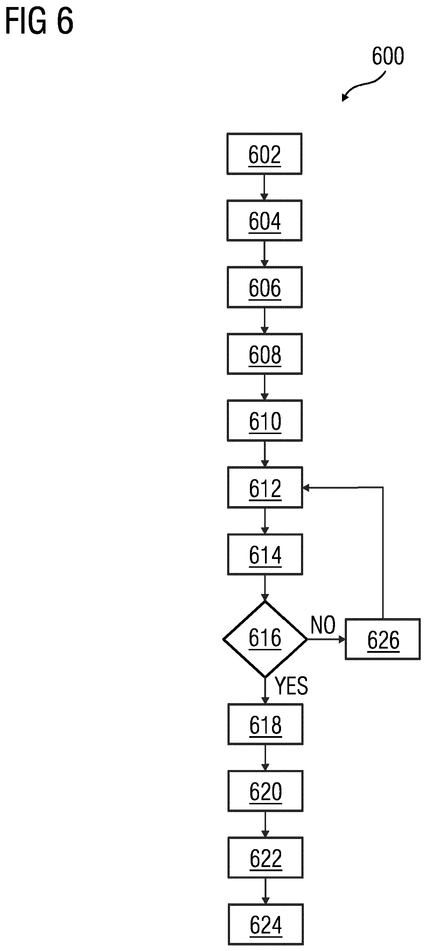

An exemplary embodiment of implementation of the method is depicted in FIG 6. Referring to FIG 6, illustrated is a flow diagram depicting an exemplary method 600 of automatically optimizing object detection model for accurately detecting one or more objects in a computer simulated environment, according to an embodiment of the present invention. At step 602, a base object detection model is selected based on prior knowledge for optimization. At step 604, point cloud data is loaded on which the object detection task is to be performed. At step 606, pre-processing steps are performed to remove anomalies from the point cloud data. At step 608, the base object detection model configuration is initialized to detect objects in the point cloud data. At step 610, "N" number of random architectures (pattern models) are initialized based on the base object model configuration. The pattern models determine the connection patterns and optimal weight between these connection for the base object detection model. At step 612, connection patterns and corresponding optimal weights are determined from the pattern models by executing the "N" pattern models on the point cloud data. At step 614, the updated base object detection model i.e. the set of object detection models with optimized weights from the first iteration are evaluated using the point cloud data. A fitness score is assigned to each of the pattern model corresponding to each updated object detection model when executed on the point cloud data. At this step, the base object detection model configuration will try to detect objects in the point cloud data and learn pattern in further generation. Consequently, these weights are transferred to the off-spring pattern models and then corresponding object detection models are updated accordingly. At step 616, it is determined if the fitness score is above a predefined threshold or below the predefined threshold. If the fitness score is above the predefined threshold, the step 618 executed. If the fitness score is below the predefined threshold, then step 626 is executed and an iterative loop is triggered to generate new generation of pattern models and corresponding object detection models until the criteria of fitness score is met. At step 626, the best performing models from the previous iteration are evolved into "N" number of new pattern models using cross-over, mutation, and speciation techniques of neuro-evolution algorithms. At step 618, the object detection model corresponding to the fitness score above predefined threshold fitness score is selected for performing object detection task on the received point cloud data. At step 620, the optimized object detection model is validated on the test dataset. At step 622, the optimized object detection model is executed on the point cloud data for performing object detection task. At step 624, the detected objects are rendered to the user in the metaverse.

It should be noted that though the proposed invention is explained in the context of optimizing object detection models for rendering the metaverse scene, the invention is not limited to optimizing object detection algorithms, but other AI models as well that need to be optimized for better performance on a given task.

The proposed invention offers several advantages over existing methods such as RL, gradient-based optimization, and Bayesian optimization for Neural Architecture Search (NAS) for model optimization. The present invention proposes a generative encoding method where neural network architecture is generated based on a separate genotype, rather than directly optimizing the network's weights. This allows for a more principled exploration of the architecture space by leveraging patterns and regularities in the genotype such as the received point cloud data. The proposed algorithms exploit regularities in the problem domain by using a Compositional Pattern Producing Network (CPPN) to generate the network's connectivity pattern. This enables the algorithm to encode symmetries and repetitions, leading to more efficient and compact architectures. Furthermore, the proposed algorithm is highly scalable, meaning they can handle complex architectures with a large number of nodes and connections. This scalability is beneficial for NAS tasks that require searching in a high-dimensional space of architectures. Moreover, the proposed algorithm demonstrate the ability to transfer knowledge gained from solving one task to another. The evolved regularities and patterns in the genotype can be reused or adapted to different problem domains, saving computation time and improving efficiency. Furthermore, the proposed algorithm perform optimization task in a lower-dimensional space compared to direct weight-based optimization methods. This reduces the search space complexity and alleviates the issue of vanishing or exploding gradients often encountered in gradient-based optimization approaches. Moreover, the proposed algorithm in the invention is capable of exploiting domain-specific information or constraints by incorporating them into the genotype or fitness function. This allows for tailored search processes that align with specific requirements or characteristics of the problem domain.

With respect to the computer simulated environments, the present invention provides an automated way to tailor object detection models specifically for the task of identifying assets within a computer-simulated environment (metaverse), reducing the need for manual expert intervention in model design and tuning. Advantageously, by iteratively generating and evaluating pattern models and corresponding optimization parameters, the method aims to significantly improve the accuracy of object detection compared to using a generic, off-the-shelf model. Furthermore, the method utilizes point cloud data from real-world scenes corresponding to metaverse assets, ensuring that the optimized models are relevant and effective for the intended virtual environment. It is to be noted that the optimization process learns from the specific characteristics (features, symmetries, patterns) of the point cloud data related to the technical installation, resulting in models that are highly adapted to the particular assets and their environment within the metaverse. The present invention proposes effective selection of a base object detection model with a reasonable initial probability of success helps to streamline the optimization process and potentially leads to faster convergence to high-performing models. One of the major advantages of the proposed invention is that the iterative and evolutionary nature of the optimization process allows for the exploration of a wide range of model configurations, potentially leading to the discovery of novel and highly effective architectures or parameter settings that might not be obvious through manual design. Furthermore, the method provides a mechanism to detect substantial changes in the point cloud data that might affect detection accuracy, triggering a re-optimization process to ensure continued reliable performance in dynamic environments. Advantageously, the ability to store and map new point cloud data to previously optimized models based on feature similarity significantly improves efficiency by reducing the need to re-optimize for recurring or similar scenarios, saving computational resources and time.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of Reference numerals:

- 100: Computing environment
- 102: Computing system
- 104: Data acquisition devices
- 106: Assets
- 107: Computer simulated environment
- 108: Objects
- 110: Electronic device
- 112: Database
- 114: Hardware processor(s)
- 116: Memory
- 118: object detection model optimization module
- 120: Communication network
- 122: Technical installation
- 202: Processor(s)
- 204: Memory
- 206: Storage unit
- 208: Network interface
- 210: Input unit
- 212: Output unit
- 214: Bus
- 302: Data acquisition module
- 304: feature extraction module
- 306: Base object detection selection module
- 308: first pattern model generation module
- 310: second pattern model generation module
- 312: model optimization pattern determination module
- 314: first object detection model generation module
- 316: second object detection model generation module
- 318: fitness score evaluation module
- 320: optimal object detection model identification module
- 322: rendering module
- 324: object detection model quality monitoring module
- 326: optimal model detection discovery module
- 400: Flow diagram depicting method of optimizing object detection model for detecting one or more objects in a computer simulated environment
- 500: Flow diagram depicting method of acquiring three-dimensional (3D) point cloud data
- 600: flow diagram depicting an exemplary method of automatically optimizing object detection model for accurately detecting one or more objects in a computer simulated environment
- 700: flow diagram depicting an exemplary method for generating the first set of object detection models
- 702: Substrate or base object detection model
- 704: First set of pattern models
- 704': Top performing pattern models
- 706: Point cloud data
- 708: first set of object detection models
- 800: flow diagram depicting an exemplary method for generating the second set of object detection models
- 802: Evaluation module
- 804: Ranking module
- 806: crossover operation
- 808: mutation operation
- 810: speciation operation
- 812: Second set of pattern models
- 814: Second set of object detection models
- 900A: exemplary method of mutation operation performed for generating second set of pattern models
- 900B: exemplary method of crossover operation performed for generating second set of pattern models
- 900C: exemplary method of speciation operation performed for generating second set of pattern models
- 904: Grouping module
- 906: Similarity module
- 1000: flow diagram depicting generation of connection between nodes in the substrate
- 1002: substrate
- 1004: Coordinate pair
- 1006: CPPN
- 1008: Weight of connections
- 1100: flow diagram depicting a process flow of evaluation of generated object detection models and selection of optimal object detection models
- 1102: Object detection models
- 1104: Pattern models
- 1106: Point cloud data
- 1108: Evaluation module
- 1200: flow diagram depicting a process flow of selecting optimal objection detection model for a particular point cloud data
- 1202: Plurality of point cloud data
- 1204: Plurality of optimized object detection models
- 1300: flow diagram depicting a process flow of storing optimal object detection models in a database
- 1302: New point cloud data
- 1304: Feature extraction module
- 1306: Similarity module
- 1308: optimal object detection model
- 1400: exemplary method of initiating the generation of third set of object detection models when a decrease in accuracy of object detection is detected in a computer-simulated environment
- 1402: point cloud data
- 1404: optimized object detection model
- 1406: accuracy monitoring module
- 1408: Decision making module
- 1410: Rendering module

## Claims

1. A method (400, 600) for automatically optimizing object detection model for accurately detecting one or more objects (108) in a computer simulated environment (107), the method comprising:
receiving, by a processing unit (114, 202), point cloud data (706, 1106, 1202, 1402) pertaining to a real-world scene having one or more objects (108) therein corresponding to one or more assets (106) in a technical installation (122);
extracting, by the processing unit (114, 202), one or more features from individual points in the point cloud data (706, 1106, 1202, 1402), wherein the one or more features correspond to one or more properties of the one or more objects (108);
selecting, by the processing unit (114, 202), a base object detection model (702) based on the extracted features, wherein the selection is based on a probability of accurate object detection when the base object detection model is executed on the point cloud data (706, 1106, 1202, 1402);
generating, by the processing unit (114, 202), a first set of pattern models (704, 1104) from the base object detection model (702), wherein each of the pattern models in the first set of pattern models identify symmetries and patterns from the point cloud data (706, 1106, 1202, 1402);
determining, by the processing unit (114, 202), a first set of model optimization parameters for updating the base object detection model (706) based on the results of the execution of pattern models on the point cloud data (706, 1106, 1202, 1402), to obtain a first set of object detection models (708);
evaluating, by the processing unit (114, 202), a performance of each of first set of pattern models (704, 1104) by calculating a fitness score based on an accuracy of object detection task performed by the corresponding object detection model in the first set of object detection models (708);
iteratively generating, by the processing unit (114, 202), a second set of pattern models (812, 1104) and corresponding second set of optimization parameters to obtain a second set of object detection models (814), until a target criteria is satisfied, wherein the target criteria is identifying a pattern model and corresponding optimization parameters that when executed on the point cloud data (706, 1106, 1202, 1402) using the updated object detection model, outputs a fitness score above a predefined threshold fitness score, and wherein each of the pattern models in the second set of pattern models (812, 1104) identify symmetries and patterns from the point cloud data;
identifying, by the processing unit (114, 202), one or more optimized object detection models (1204, 1308, 1404) from the second set of object detection models (814) or first set of object detection models (708) based on a pre-defined level of accuracy for object detection tasks to be performed on the point cloud data (706, 1106, 1202, 1402);
performing, by the processing unit (114, 202), object detection tasks on the received point cloud data (706, 1106, 1202, 1402), using the one or more optimized object detection models.

2. The method (400, 600) according to claim 1, wherein determining the first set of model optimization parameters comprises:
generating, by the processing unit (114, 202), a first set of patterns from the point cloud data (706, 1106, 1202, 1402) by executing the generated first set of pattern models (704, 1104) on the point cloud data, wherein the first set of patterns comprises at least one of: spatial arrangements, object symmetries, orientation patterns, object scaling variations, and relational patterns between the objects;
determining, by the processing unit (114, 202), the first set of model optimization parameters for updating the base object detection model (702) based on the generated first set of patterns, wherein the first set of model optimization parameters comprises at least one of: number of layers of nodes in the first set of pattern models, number of nodes in each layer in the first set of pattern models, connections between nodes of the first set of pattern models, and weights of each connection of the first set of pattern models.

3. The method (400, 600, 700) according to claim 1 further comprises generating the first set of object detection models (708) by:
updating, by the processing unit (114, 202), one or more initial parameters of the base object detection model (702) with one or more model optimization parameters in the first set of model optimization parameters, wherein the one or more model optimization parameters correspond to each pattern model in the first set of pattern models (704, 1104);
generating, by the processing unit (114, 202), the first set of object detection models (708) corresponding to the first set of model optimization parameters comprising one or more model optimization parameters determined for each pattern model in the first set of pattern models (704, 1104).

4. The method (400, 600, 1100) according to claim 1, wherein evaluating the performance of each of first set of pattern models (704, 1104) comprises:
executing, by the processing unit (114, 202) each of the first set of object detection models (708, 1102) on the point cloud data (706, 1106, 1202, 1402);
calculating, by the processing unit (114, 202), a fitness score for each of the first set of pattern models (704, 1104) corresponding to respective first set of object detection models (708, 1102), wherein the fitness score is calculated based on an accuracy of object detection task of the respective first set of object detection models.

5. The method (400, 600) according to claim 1, wherein determining the second set of model optimization parameters comprises:
generating, by the processing unit (114, 202), a second set of patterns from the point cloud data by executing the generated second set of pattern models (812) on the point cloud data (706, 1106, 1202, 1402), wherein the second set of patterns comprises at least one of: spatial arrangements, object symmetries, orientation patterns, object scaling variations, and relational patterns between the objects;
determining, by the processing unit (114, 202), the second set of model optimization parameters for updating the first set of object detection models (708) based on the generated second set of patterns, wherein the second set of parameters comprises at least one of: number of layers of nodes in the second set of pattern models, number of nodes in each layer in the second set of pattern models, connections between nodes of the second set of pattern models, and weights of each connection of the second set of pattern models.

6. The method (400, 600, 800) according to claim 1 further comprises generating the second set of object detection models (814) by:
updating, by the processing unit (114, 202), one or more parameters of each of the first set of object detection models (708) with one or more model optimization parameters in the second set of model optimization parameters, wherein the one or more model optimization parameters correspond to each pattern model in the second set of pattern models (812);
generating, by the processing unit (114, 202), the second set of object detection models (814) corresponding to the second set of model optimization parameters comprising one or more model optimization parameters determined for each pattern model in the second set of pattern models (812).

7. The method (400, 600, 1100) according to claim 1, wherein evaluating the performance of each of second set of pattern models (812, 1104) comprises:
executing, by the processing unit (114, 202)each of the second set of object detection models (814, 1102) on the point cloud data (706, 1106, 1202, 1402);
calculating, by the processing unit (114, 202), a fitness score for each of the second set of pattern models (812, 1104) corresponding to respective second set of object models (814, 1102), wherein the fitness score is calculated based on an accuracy of object detection task of the respective second set of object detection models.

8. The method (400, 600, 1200) according to claim 1, wherein identifying one or more optimized object detection models (1204, 1308, 1404) from the first set of object detection models (708) comprises:
selecting, by the processing unit (114, 202), the one or more object detection models from the first set of object detection models (708) corresponding to the pattern model from the first set of pattern models (704) having a highest fitness score, if the first set of pattern models comprises at least one pattern model with a fitness score above the predefined threshold fitness score.

9. The method (400, 600, 1200) according to claim 1, wherein identifying one or more optimized object detection models (1204, 1308, 1404) from the second set of object detection models (814) comprises:
selecting, by the processing unit (114, 202), the one or more object detection models from the second set of object detection models (814) corresponding to the pattern model from the second set of pattern models having a highest fitness score, if the second set of pattern models comprises at least one pattern model with a fitness score above the predefined threshold fitness score.

10. The method (400, 600) according to any of the preceding claims, wherein the first set of pattern models (704, 1104) are generated by:
randomizing, by the processing unit (114, 202), architecture of the base object detection model (702), each architecture comprising random network topology of different layers of nodes, connection between each layer of nodes, and corresponding weights of each connection between nodes.

11. The method (400, 600) according to any of the preceding claims, wherein the second set of pattern models (812, 1104) are generated by:
selecting, by the processing unit (114, 202), top performing pattern models (704') from the first set of pattern models (704, 1104), wherein the first set of pattern models when evaluated on the base object detection model (702) have the fitness score below the predefined threshold fitness score; and
generating, by the processing unit (114, 202), the second set of pattern models (812, 1104) from the top performing models using crossover (806), mutation (808) and speciation (810) techniques of neuro-evolution algorithms, wherein the second of pattern models correspond to architectures having a new population of pattern models generated based on patterns learned from the point cloud data (706, 1106, 1202, 1402) using the first set of pattern models.

12. The method (400, 600) according to claim 11, wherein the top performing pattern models (704') are selected by:
ranking, by the processing unit (114, 202) the first set of pattern models (704) based on the calculated fitness score in a descending order,
discarding, by the processing unit (114, 202) last two pattern models from the first set of pattern models having lowest ranking in the order.

13. The method (400, 600) according to claim 11, wherein generating the second set of pattern models (812, 1104) using neuro-evolution algorithm comprises:
identifying, by the processing unit (114, 202) network topology with parameters such as nodes and weights, of each the top performing models (704'); and
mixing, by the processing unit (114, 202) different pairs of the top performing models based on the identified network topology using crossover operation (806) in order to generate the second set of pattern models, each having a novel architecture of the network topology.

14. The method (114, 202) according to claim 11, wherein generating the second set of pattern models (812, 1104) using neuro-evolution algorithm comprises:
identifying, by the processing unit (114, 202), network topology with parameters such as nodes and weights, of each the top performing pattern models (704'); and
introducing, by the processing unit (114, 202), random changes to each of the top performing pattern models (704') using mutation operation (808) in order to generate the second set of pattern models, each having novel a novel architecture, wherein random changes comprise at least one of: addition of a node, deletion of a node, addition of a connection, deletion of a connection, addition of a layer, and deletion of a layer.

15. The method (400, 600) according to claim 11, wherein generating the second set of pattern models (812, 1104) using neuro-evolution algorithms comprises:
classifying, by the processing unit (114, 202), the top performing pattern models (704') into different groups based on a specie of the pattern models, wherein top performing pattern models having a topological similarity are clustered together;
evolving, by the processing unit (114, 202), the pattern models from each of the cluster using speciation operation (810) in order to generate the second set of pattern models, each having a novel architecture.

16. The method (400, 600) according to any of the preceding claims, wherein each of the pattern models in the first set of pattern models (704, 1104) and the second set of pattern models (812, 1104) identify symmetries and patterns from the point cloud data pertaining to at least one of: object placement, object orientation, object scale, object relationships, and spatial distribution.

17. The method (400, 600) according to any of the preceding claims, wherein the one or more features comprises at least of: Point Coordinates (XYZ), Surface Normals, Curvature, RGB Values, Intensity Values, Connectivity, Neighborhood Relationships, Temporal Consistency, Bounding Boxes or Envelopes, Shape Descriptors, Spatial Relationships.

18. The method (400, 600) according to any of the preceding claims, wherein receiving the point cloud data (706, 1106, 1202, 1402) comprises receiving a three-dimensional (3D) multimedia data corresponding to one or more scenes to be rendered in the computer-simulated environment (107), from one or more data acquisition devices (104).

19. The method (400, 600) according to any of the preceding claims, wherein extracting one or more features from the point cloud data further comprises removing anomalies from the point cloud data (706, 1106, 1202, 1402), wherein anomalies are at least one of: outliers, noise, missing data points, duplicate points, or irrelevant artifacts that do not represent the true geometry or structure of the objects within the computer simulated environment (107).

20. The method (400, 600) according to any of the preceding claims wherein the method of performing, object detection tasks on the received point cloud data (706, 1106, 1202, 1402), using the optimized object detection model (1204, 1308, 1404) further comprises validating an accuracy of the optimized object detection model by executing the optimized object detection model on the received point cloud data.

21. The method (400, 600, 1400) according to any of the preceding claims, further comprising:
detecting, by the processing unit (114, 202) a substantial change in one or more features of the received point cloud data (706, 1106, 1202, 1402) pertaining to one or more scenes of the computer simulated environment (107), wherein the substantial change corresponds to a decrease in accuracy of a current object detection model in execution; and
iteratively generating, by the processing unit (114, 202), a third set of pattern models and corresponding third set of optimization parameters to obtain a third set of object detection models, until a target criteria is satisfied, wherein the target criteria is identifying a pattern model and corresponding optimization parameters that when executed on the point cloud data using the updated object detection model, outputs a fitness score above a predefined threshold fitness score, when the substantial change in the one or more features of the point cloud data is detected.

22. The method (400, 600, 1300) according to any of the preceding claims, further comprising:
storing, by the processing unit (114, 202), a plurality of optimized object detection models (1204, 1308, 1404) generated for a plurality of point cloud data (706, 1106, 1202, 1402) against one or more features extracted from respective point clouds in a database (112);
mapping, by the processing unit (114, 202), a new point cloud data (1302) to one of the optimized object detection models (1204, 1308, 1404) stored in the database based on a similarity of extracted one or more features from the new point cloud data to the one or more features stored in the database (112).

23. A computing system (102) for automatically optimizing object detection model for accurately detecting one or more objects in a computer simulated environment (107), the computing system comprising:
one or more processing units (114, 202);
a memory (116) communicatively coupled to the one or more processing units, the memory comprising an object detection model optimization module (118) stored in the form of machine-readable instructions executable by the one or more processing units, wherein the module is configured to perform the method steps according to claims 1 to 22

24. A computing environment (100) for automatically optimizing object detection model for accurately detecting one or more objects in a computer simulated environment (107), the computing environment comprising:
one or more electronic devices (110);
one or more technical installations (122) comprising one or more assets (106) in a real-world environment;
one or more data acquisition devices (104) for acquiring point cloud data (706, 1106, 1202, 1402);
a computer simulated environment (107) for rendering one or more objects (108) corresponding to the one or more assets (106), communicatively coupled to the at least one or more technical installations (122) via a communication network (120);
a computing system (102) according to claim 23, communicatively coupled to the at computer simulated environment (107) and the at least one or more technical installations (122) via the communication network (120), wherein the apparatus (116) comprises a object detection model optimization module (118) configured for automatically optimizing object detection model for accurately detecting one or more objects in the computer simulated environment, according to any of the method claims 1 to 22.

25. A computer-program product, having computer-readable instructions stored therein, that when executed by a processing unit, cause the processing unit to perform method steps according to any of the claims 1 to 22.
